# EUROPEAN PATENT SPECIFICATION

(11) **EP 2 405 631 B1**
(45) Date of publication and mention of the grant of the patent: **24.04.2013**
(21) Application number: 10168986.7
(22) Date of filing: 09.07.2010
(51) Int. Cl.: H04M 1/57, H04M 1/725

(54) **Automatic linking of contacts in message content**
Automatische Verbindung von Kontakten in Benachrichtigungsinhalt
Liaison automatique de contacts dans le contenu d'un message

(43) Date of publication of application: 11.01.2012
(73) Proprietor: Research In Motion Limited, Waterloo, ON N2L 3W8 (CA)
(72) Inventor: Yach, David Paul, Waterloo Ontario N2L 3W8 (CA)
(74) Representative: Moore, Barry

(56) References cited:
- EP-A1- 1 781 000
- EP-A1- 2 073 517
- EP-A2- 1 244 260
- US-A1- 2006 005 128
- US-A1- 2006 088 144
- US-A1- 2006 179 114
- APPLE: 'iPhone 3G user manual', [Online] 11 July 2008, pages 1 - 154, XP007907619 20080711 Retrieved from the Internet: <URL:http://manuals.info.apple.com/en_US/iP hone_User_Guide.pdf>

## Description

The present application relates generally to display of messages and addressing of messages composed on a communication device.

Communication devices, and in particular mobile communication devices, are frequently used to place and receive voice calls and to send and receive electronic communications, which may include e-mail, short message service (SMS), multimedia messaging service (MMS) and video messaging service (VMS) messages, as well as other forms of messages. To initiate communications, the communication device may be provided with address book and messaging applications that may be used by the user to address and compose a message. A user interface for message composition typically provides an address field for entry of recipient names and/or addresses at the top of a display, and a field for entry of the message body below the address field. Thus, following the user interface from the top down, the user may input the names or addresses of intended recipients, and then scroll down to the message body field to compose the message. However, if the user recalls in the midst of composing the message that he or she wished to send the message to an additional recipient, the user must halt composition, scroll back up to the top of the user interface, and add the further name or address. Failing this, the user may forget to add the additional recipient to the address field before transmitting the message, requiring the creation and transmission of a further message to the missing recipient.

Further, when a user is reading a message received at on the communication device, he or she may wish to compose and send a related message or make a voice call in response to, or as a consequence of, the read message. For example, the message body of an e-mail may include a reference to another person that the user may wish to contact by e-mail. If this other person was not already included in the header of the message as a recipient or a sender of the message being read, then the user must retrieve the person's e-mail address from another source to be able to address a message to them. This may require the user to halt reading of the message and to launch a separate application to look up the other person's contact information.

US 2006/179114 discloses a terminal and computer program product to allow a user of a communication device to quickly reply to a received email message using one of several communication methods. US 2006/005128 discloses a system and method for displaying an expanded email header that includes a sender's contact data. EP 1244260 discloses a communication terminal unit capable of identifying a message sender for the purpose of providing a notification to a user of the unit.

### GENERAL

The embodiments described herein may provide systems and methods for automatic identification of potential message recipients in content composed or viewed at a communication device, and for automatic linking of identified potential recipients to their associated contact information. These methods and systems may provide for streamlined message composition and addressing, thus reducing the need for launching separate applications for retrieving contact information. These embodiments will be described primarily in relation to a mobile wireless communication device, hereafter referred to as a communication device. It will be appreciated by those skilled in the art, however, that this description is not intended to limit the scope of the described embodiments to mobile communication devices. The methods and systems described herein may be applied to any appropriate communication or data processing device, whether portable or wirelessly enabled or not, including without limitation cellular phones, smartphones, wireless organizers, personal digital assistants, desktop computers, terminals, laptops, tablets, handheld wireless communication devices, wirelessly-enabled notebook computers and the like. Further, the embodiments below are described primarily in relation to e-mail communications, but it will also be appreciated by those skilled in the art that the below systems and methods may be implemented with other messaging formats and transports such as SMS, MMS, voicemail, VMS, and other network message formats, such as those that may be used in instant messaging. In addition, the embodiments below may also be implemented with other personal information data formats, such as tasks, appointments and meeting requests, and other calendar events.

According to an aspect of the embodiments described herein, there may be provided an improved method and system for displaying a message in a user interface at an electronic communication device. The electronic communication device may be a mobile communication device. The method in this aspect may provide for associating at least one string in a message body of the message with a contact address, the contact address being comprised in another portion of the message; and rendering the at least one string in the message body for display in said user interface such that said at least one string is actuatable through user input to invoke a command, said at least one string being actuatable in association with the associated contact address. In a further embodiment, the method may comprise indicating in said user interface that said string is associated with the contact address.

According to another aspect, the string in the message body may be a name in the message body, and associating the string in the message body with the contact address comprises identifying a further name comprised in the message, the further name being determined to be a match, or an approximate match, for the name in the message body; and identifying a contact address determined to be associated with said further name.

According to another aspect, the name in the message body may be identified by scanning the message body for a string matching a predefined pattern associated with a proper noun. In still a further aspect, rendering the string in the message body may comprise rendering the string as a hyperlink. Further, a portion of the message may comprise a message header, the message header comprising at least one address for an addressee of the message, and associating the string in the message body with the contact address comprises matching the said string with a further string comprised in the message header, the further string being determined to be associated with one of the at least one address. In yet a further aspect, associating the string in the message body with the contact address may comprise matching the said string with a further string comprised in the message body, the further string being determined to be associated with the contact address due to proximity of the contact address to the further string.

Another aspect of the embodiments provided herein may comprise detecting a command in respect of said string, and in response to said detected command, either inserting said associated contact address in a header of the message as a recipient of said message, or generating a new message addressed to the contact address associated with said string. In a still further aspect, the contact address may be embedded in association with said string in the body to provide a revised message, and storing said revised message at the electronic communication device. A still further aspect may provide for generating a new message comprising at least a portion of the revised message. The contact address may be obtained from a contact data store, and the type of contact address obtained from the data store is determined by a disambiguation hint proximate to the at least one name in the message body. The contact data store may comprise an address book available to the communication device. Further, according to yet another aspect, the message body may comprise at least a portion of each of a body of a previously received message and a header of the previously received message.

There may also be provided a computer program product comprising a non-transitory computer-readable medium having embodied therein code which, when executed by a processing device causes the device to carry out the method of associating at least one string in a message body of the message with a contact address, the contact address being comprised in another portion of the message; and rendering the at least one string in the message body for display in said user interface such that said at least one string is actuatable through user input to invoke a command, said at least one string being actuatable in association with the associated contact address.

The embodiments herein may further provide a system or a communication device, such as a mobile communication device, comprising a message store configured to store a plurality of messages, a display for displaying the user interface, an input subsystem for receiving input via the user interface, a processor configured to access the message store, and a wireless communication subsystem for transmitting and receiving messages. The processor may also be configured to associate a string in a message body of the message with a contact address, the contact address being comprised in another portion of the message; and render the string in the message body for display in said user interface such that said at least one string is actuatable through user input to invoke a command, said at least one string being actuatable in association with the associated contact address.

According to another aspect of the within embodiments, the string in the message body may comprise a name in the message body, and the processor is configured to associate the string in the message body with the contact address by identifying a further name comprised in the message, the further name being determined to be a match, or an approximate match, for the name in the message body; and identifying a contact address determined to be associated with said further name. The processor may be configured to identify the name in the message body by scanning the message body for a string matching a predefined pattern associated with a proper noun. The processor may further be configured to render the string in the message body as a hyperlink.

According to another aspect, a portion of the message may comprise a message header, the message header comprising at least one address for an addressee of the message, and the processor is configured to associate the string in the message body with the contact address by matching the said string with a further string comprised in the message header, the further string being determined to be associated with one of the at least one address. The processor may be configured to associate the string in the message body with the contact address by matching the said string with a further string comprised in the message body, the further string being determined to be associated with the contact address due to proximity of the contact address to the further string.

According to another aspect, the processor may be further configured to detect via the input subsystem a command in respect of said string, and in response to said detected command, either insert said associated contact address in a header of the message as a recipient of said message, or generate a new message addressed to the contact address associated with said string. The processor may further be configured to embed the contact address in association with said string in the body of the message to provide a revised message, and store said revised message in the message store. In a further aspect the processor may be configured to generate a new message comprising at least a portion of the revised message.

According to yet another aspect, a communication device may be adapted to obtain the contact address from the contact data store, and the type of contact address obtained from the data store is determined by a disambiguation hint proximate to the at least one name in the message body. In a further embodiment, there may be provided a communication device adapted to access an address book from the contact data store.

### Brief Description of the Drawings

In drawings which illustrate by way of example only embodiments of the present application,

FIG. 1 is a block diagram of an embodiment of a mobile device.

FIG. 2 is a block diagram of an embodiment of a communication subsystem component of the mobile device of FIG. 1.

FIG. 3 is an exemplary block diagram of a node of a wireless network for use with the mobile device of FIG. 1.

FIG. 4 is a block diagram illustrating components of a host system in one exemplary configuration for use with the wireless network of FIG. 3 and the mobile device of FIG. 1.

FIG. 5A is an illustration of a message that may be processed in accordance with the systems and methods herein.

FIGS. 5B to 5E are examples of user interfaces displaying portions of the message of FIG. 5A.

FIGS. 6A to 6H are further examples of user interfaces displaying portions of the message of FIG. 5A.

FIG. 7 is an illustration of a further message in accordance with a further embodiment.

FIG. 8 is a flowchart illustrating a general method for identifying contact names in a message.

FIGS. 9A to 9G are flowcharts illustrating further methods for identifying contact names in a message.

FIGS. 10A and 10B are flowcharts illustrating methods for handling actions relating to contact names identified in a message.

FIGS. 11A to 11D are examples of user interfaces implementing further methods for handling contact names identified in a message.

FIGS. 12A and 12B are flowcharts illustrating methods for generating messages.

FIGS. 13A and 13B are examples of user interfaces displaying portions of a calendar event.

### Detailed Description of Drawings

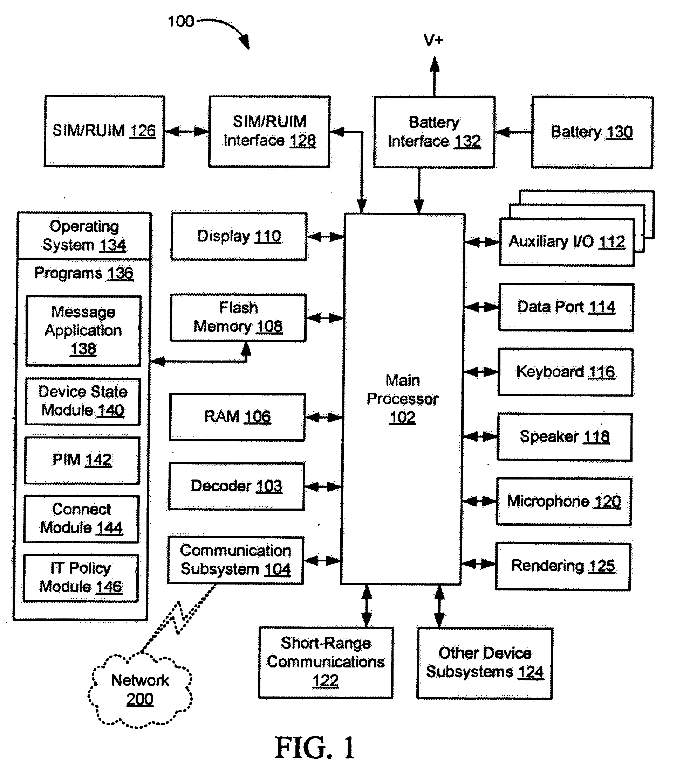

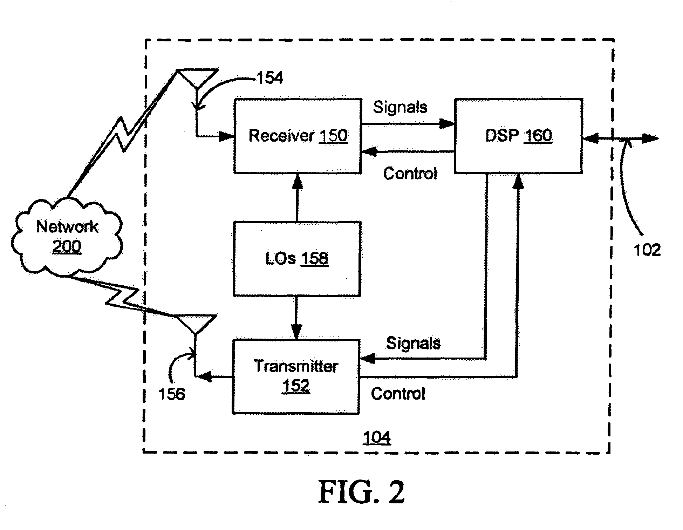

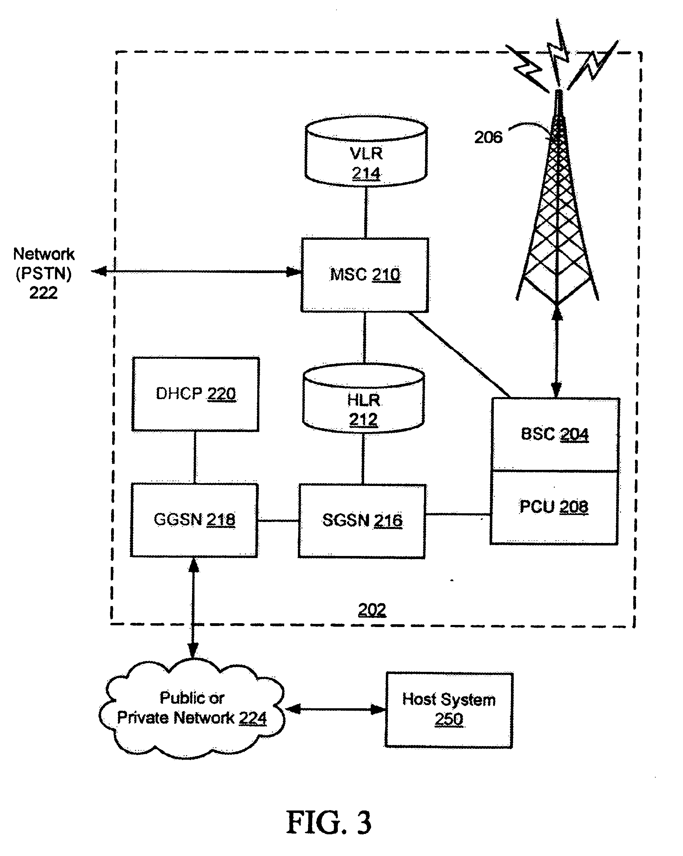

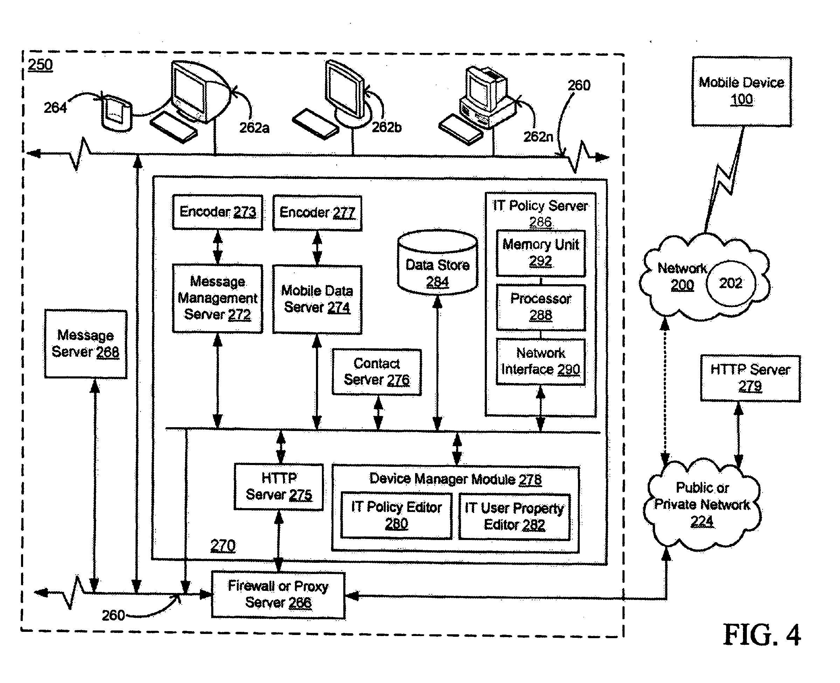

The embodiments described herein may be implemented on a communication device such as that illustrated in FIGS. 1 and 2. The communication device may communicate with other devices over a wireless communication system or enterprise system as illustrated in FIGS. 3 and 4. The communication device 100 may be a mobile device with two-way communication and advanced data communication capabilities including the capability to communicate with other mobile devices or computer systems through a network of transceiver stations. The communication device 100 can also have voice communication capabilities.

FIG. 1 is a block diagram of an exemplary embodiment of a communication device 100. The communication device 100 includes a number of components such as a main processor 102 that controls the overall operation of the communication device 100. Communication functions, including data and voice communications, are performed through a communication subsystem 104. Data received by the communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE and UMTS, or fourth-generation (4G) networks such as LTE and LTE Advanced. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display 110, the rendering circuit 125 analyzes and processes the data file for visualization on the display 110. Rendering circuit 125 may be implemented as hardware, software, or as a combination of both hardware and software.

The communication device 100 can send and receive communication signals over the wireless network 200 after required network registration or activation procedures have been completed. Network access is associated with a subscriber or user of the communication device 100. To identify a subscriber, the communication device 100 requires a SIM/RUIM card 126 (i.e. Subscriber Identity Module or a Removable User Identity Module) to be inserted into a SIM/RUIM interface 128 in order to communicate with a network. The SIM/RUIM card 126 is one type of a conventional "smart card" that can be used to identify a subscriber of the communication device 100 and to personalize the communication device 100, among other things. Without the SIM/RUIM card 126, the communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the communication device 100. Although current technology makes use of a battery, future technologies such as micro fuel cells can provide the power to the communication device 100.

The communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the communication device 100 during its manufacture. Other software applications include a message application 138 that can be any suitable software program that allows a user of the communication device 100 to send and receive electronic messages. Various alternatives exist for the message application 138 as is well known to those skilled in the art. Messages that have been sent or received by the user are typically stored in the flash memory 108 of the communication device 100 or some other suitable storage element in the communication device 100. In at least some embodiments, some of the sent and received messages can be stored remotely from the device 100 such as in a data store of an associated host system that the communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the communication device 100 with respect to such items. This can be particularly advantageous when the host computer system is the mobile device subscriber's office computer system.

The communication device 100 also includes a connect module 144, and an information technology (IT) policy module 146. The connect module 144 implements the communication protocols that are required for the communication device 100 to communicate with the wireless infrastructure and any host system, such as an enterprise system, that the communication device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the communication device 100 to allow the communication device 100 to use any number of services associated with the enterprise system. The connect module 144 allows the communication device 100 to establish an end-to-end secure, authenticated communication pipe with the host system. A subset of applications for which access is provided by the connect module 144 can be used to pass IT policy commands from the host system to the communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the communication device 100. These software applications can be third party applications, which are added after the manufacture of the communication device 100. Examples of third party applications include games, calculators, utilities, etc.

The additional applications can be loaded onto the communication device 100 through at least one of the wireless network 200, the auxiliary I/O subsystem 112, the data port 114, the short-range communications subsystem 122, or any other suitable device subsystem 124. This flexibility in application installation increases the functionality of the communication device 100 and can provide enhanced on-device functions, communication-related functions, or both. For example, secure communication applications can enable electronic commerce functions and other such financial transactions to be performed using the communication device 100.

The data port 114 enables a subscriber to set preferences through an external device or software application and extends the capabilities of the communication device 100 by providing for information or software downloads to the communication device 100 other than through a wireless communication network. The alternate download path can, for example, be used to load an encryption key onto the communication device 100 through a direct and thus reliable and trusted connection to provide secure device communication. The data port 114 can be any suitable port that enables data communication between the communication device 100 and another computing device. The data port 114 can be a serial or a parallel port. In some instances, the data port 114 can be a USB port that includes data lines for data transfer and a supply line that can provide a charging current to charge the battery 130 of the communication device 100.

The short-range communications subsystem 122 provides for communication between the communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the communication device 100 is substantially similar, except that the received signals are output to the speaker 118, and signals for transmission are generated by the microphone 120. Alternative voice or audio I/O subsystems, such as a voice message recording subsystem, can also be implemented on the communication device 100. Although voice or audio signal output is accomplished primarily through the speaker 118, the display 110 can also be used to provide additional information such as the identity of a calling party, duration of a voice call, or other voice call related information.

FIG. 2 shows an exemplary block diagram of the communication subsystem component 104. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the communication device 100 is intended to operate. Thus, it should be understood that the design illustrated in FIG. 2 serves only as one example.

Signals received by the antenna 154 through the wireless network 200 are input to the receiver 150, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 can be adaptively controlled through automatic gain control algorithms implemented in the DSP 160.

The wireless link between the communication device 100 and the wireless network 200 can contain one or more different channels, typically different RF channels, and associated protocols used between the communication device 100 and the wireless network 200. An RF channel is a limited resource that should be conserved, typically due to limits in overall bandwidth and limited battery power of the communication device 100. When the communication device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

FIG. 3 is a block diagram of an exemplary implementation of a node 202 of the wireless network 200. In practice, the wireless network 200 comprises one or more nodes 202. In conjunction with the connect module 144, the communication device 100 can communicate with the node 202 within the wireless network 200. In the exemplary implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the communication device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the communication device 100 in accordance with particular, usually predetermined, communication protocols and parameters, under control of its controller. The fixed transceiver equipment similarly demodulates and possibly decodes and decrypts, if necessary, any communication signals received from the communication device 100 within its cell. Communication protocols and parameters can vary between different nodes. For example, one node can employ a different modulation scheme and operate at different frequencies than other nodes.

For all communication devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each communication device 100. The SGSN 216 also performs security functions and access control for data traffic on the wireless network 200. The GGSN 218 provides internetworking connections with external packet switched networks and connects to one or more SGSNs 216 via an Internet Protocol (IP) backbone network operated within the network 200. During normal operations, a given communication device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a communication device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each communication device 100 must be assigned to one or more APNs and communication devices 100 cannot exchange data without first performing a GPRS Attach to an APN that it has been authorized to use. The APN can be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (Ipsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a communication device 100 is not using its PDP Context, the PDP Context can be de-allocated and the IP address returned to the IP address pool managed by the DHCP server 220.

FIG. 4 is a block diagram illustrating components of an exemplary configuration of a host system 250 with which the communication device 100 can communicate in conjunction with the connect module 144. The host system 250 will typically be a corporate enterprise or other local area network (LAN), but can also be a home office computer or some other private system, for example, in variant implementations. In the example shown in FIG. 4, the host system 250 is depicted as a LAN of an organization to which a user of the communication device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's communication device 100 is situated on a LAN connection. The cradle 264 for the communication device 100 can be coupled to the computer 262a by a serial or a Universal Serial Bus (USB) connection, for example. Other user computers 262b-262n are also situated on the network 260, and each can be equipped with an accompanying cradle 264. The cradle 264 facilitates the loading of information (e.g. PIM data, private symmetric encryption keys to facilitate secure communications) from the user computer 262a to the communication device 100, and can be particularly useful for bulk information updates often performed in initializing the communication device 100 for use. The information downloaded to the communication device 100 can include certificates used in the exchange of messages.

It will be understood by persons skilled in the art that the user computers 262a-262n are typically also connected to other peripheral devices, such as printers, etc., which are not explicitly shown in FIG. 4. Furthermore, only a subset of network components of the host system 250 are shown in FIG. 4 for ease of exposition, and it will be understood by persons skilled in the art that the host system 250 will comprise additional components that are not explicitly shown in FIG. 4 for this exemplary configuration. More generally, the host system 250 can represent a smaller part of a larger network (not shown) of the organization, and can comprise different components and/or be arranged in different topologies than that shown in the exemplary embodiment of FIG. 4.

To facilitate the operation of the communication device 100 and the wireless communication of messages and message-related data between the communication device 100 and components of the host system 250, a number of wireless communication support components 270 can be provided. In some implementations, the wireless communication support components 270 can include a message management server 272, a mobile data server 274, a web server, such as Hypertext Transfer Protocol (HTTP) server 275, a contact server 276, and a device manager module 278. HTTP servers can also be located outside the enterprise system, as indicated by the HTTP server 279 attached to the network 224. The device manager module 278 includes an IT Policy editor 280 and an IT user property editor 282, as well as other software components for allowing an IT administrator to configure the communication devices 100. In an alternative embodiment, there can be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the communication devices 100. The memory unit 292 can store functions used in implementing the IT policy as well as related data. Those skilled in the art know how to implement these various components. Other components can also be included as is well known to those skilled in the art. Further, in some implementations, the data store 284 can be part of any one of the servers.

In this exemplary embodiment, the communication device 100 communicates with the host system 250 through node 202 of the wireless network 200 and a shared network infrastructure 224 such as a service provider network or the public Internet. Access to the host system 250 can be provided through one or more routers (not shown), and computing devices of the host system 250 can operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the communication device 100. The wireless VPN router allows a VPN connection to be established directly through a specific wireless network to the communication device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection may be a Transmission Control Protocol (TCP)/IP or User Datagram Protocol (UDP)/IP connection for delivering the messages directly to the communication device 100 in this alternative implementation.

Messages intended for a user of the communication device 100 are initially received by a message server 268 of the host system 250. Such messages can originate from any number of sources. For instance, a message can have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange™ server, a Lotus Domino™ server, a Novell Groupwise™ server, or another suitable mail server installed in a corporate environment. In some implementations, the host system 250 can comprise multiple message servers 268. The message server 268 can also be adapted to provide additional functions beyond message management, including the management of data associated with calendars and task lists, for example.

When messages are received by the message server 268, they are typically stored in a data store associated with the message server 268. In at least some embodiments, the data store can be a separate hardware unit, such as data store 284, with which the message server 268 communicates. Messages can be subsequently retrieved and delivered to users by accessing the message server 268. For instance, an e-mail client application operating on a user's computer 262a can request the e-mail messages associated with that user's account stored on the data store associated with the message server 268. These messages are then retrieved from the data store and stored locally on the computer 262a. The data store associated with the message server 268 can store copies of each message that is locally stored on the communication device 100. Alternatively, the data store associated with the message server 268 can store all of the messages for the user of the communication device 100 and only a smaller number of messages can be stored on the communication device 100 to conserve memory. For instance, the most recent messages (i.e. those received in the past two to three months for example) can be stored on the communication device 100.

When operating the communication device 100, the user may wish to have e-mail messages retrieved for delivery to the communication device 100. The message application 138 operating on the communication device 100 can also request messages associated with the user's account from the message server 268. The message application 138 can be configured (either by the user or by an administrator, possibly in accordance with an organization's IT policy) to make this request at the direction of the user, at some pre-defined time interval, or upon the occurrence of some pre-defined event. In some implementations, the communication device 100 is assigned its own e-mail address, and messages addressed specifically to the communication device 100 are automatically redirected to the communication device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the communication device 100. The message management server 272 also facilitates the handling of messages composed on the communication device 100, which are sent to the message server 268 for subsequent delivery.

For example, the message management server 272 can monitor the user's "mailbox" (e.g. the message store associated with the user's account on the message server 268) for new e-mail messages, and apply user-definable filters to new messages to determine if and how the messages are relayed to the user's communication device 100. The message management server 272 can also, through an encoder (not shown) associated therewith, compress message data, using any suitable compression/decompression technology (e.g. YK compression, JPEG, MPEG-x, H.26x, and other known techniques) and encrypt messages (e.g. using an encryption technique such as Data Encryption Standard (DES), Triple DES, or Advanced Encryption Standard (AES)), and push them to the communication device 100 via the shared network infrastructure 224 and the wireless network 200. The message management server 272 can also receive messages composed on the communication device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the communication device 100 can be defined (e.g. by an administrator in accordance with IT policy) and enforced by the message management server 272. These may include whether the communication device 100 can receive encrypted and/or signed messages, minimum encryption key sizes, whether outgoing messages must be encrypted and/or signed, and whether copies of all secure messages sent from the communication device 100 are to be sent to a pre-defined copy address, for example.

The message management server 272 can also be adapted to provide other control functions, such as only pushing certain message information or pre-defined portions (e.g. "blocks") of a message stored on the message server 268 to the communication device 100. For example, in some cases, when a message is initially retrieved by the communication device 100 from the message server 268, the message management server 272 can push only the first part of a message to the communication device 100, with the part being of a pre-defined size (e.g. 2 KB). The user can then request that more of the message be delivered in similar-sized blocks by the message management server 272 to the communication device 100, possibly up to a maximum pre-defined message size. Accordingly, the message management server 272 facilitates better control over the type of data and the amount of data that is communicated to the communication device 100, and can help to minimize potential waste of bandwidth or other resources.

The mobile data server 274 encompasses any other server that stores information that is relevant to the corporation. The mobile data server 274 can include, but is not limited to, databases, online data document repositories, customer relationship management (CRM) systems, or enterprise resource planning (ERP) applications. The mobile data server 274 can also connect to the Internet or other public network, through HTTP server 275 or other suitable web server such as an File Transfer Protocol (FTP) server, to retrieve HTTP webpages and other data. Requests for webpages are typically routed through mobile data server 274 and then to HTTP server 275, through suitable firewalls and other protective mechanisms. The web server then retrieves the webpage over the Internet, and returns it to mobile data server 274. As described above in relation to message management server 272, mobile data server 274 is typically provided, or associated, with an encoder 277 that permits retrieved data, such as retrieved webpages, to be decompressed and compressed, using any suitable compression technology (e.g. YK compression, JPEG, MPEG-x, H.26x and other known techniques), and encrypted (e.g. using an encryption technique such as DES, Triple DES, or AES), and then pushed to the communication device 100 via the shared network infrastructure 224 and the wireless network 200. While encoder 277 is only shown for mobile data server 274, it will be appreciated that each of message server 268, message management server 272, and HTTP servers 275 and 279 can also have an encoder associated therewith.

The contact server 276 can provide information for a list of contacts for the user in a similar fashion as the address book on the communication device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the HTTP server 275, the contact server 276, the device manager module 278, the data store 284 and the IT policy server 286 do not need to be implemented on separate physical servers within the host system 250. For example, some or all of the functions associated with the message management server 272 can be integrated with the message server 268, or some other server in the host system 250. Alternatively, the host system 250 can comprise multiple message management servers 272, particularly in variant implementations where a large number of mobile devices need to be supported.

The device manager module 278 provides an IT administrator with a graphical user interface with which the IT administrator interacts to configure various settings for the communication devices 100. As mentioned, the IT administrator can use IT policy rules to define behaviors of certain applications on the communication device 100 that are permitted such as phone, web browser or Instant Messenger use. The IT policy rules can also be used to set specific values for configuration settings that an organization requires on the communication devices 100 such as auto signature text, WLAN/VoIP/VPN configuration, security requirements (e.g. encryption algorithms, password rules, etc.), specifying themes or applications that are allowed to run on the communication device 100, and the like.

Rendering data files originally optimized or prepared for visualization on large-screen displays on a portable electronic device display often requires additional processing prior to visualization on the small-screen portable electronic device displays. According to an embodiment, this additional processing is accomplished by the rendering engine 125 shown in FIG. 1. As will be appreciated by those of skill in the art, the rendering engine can be implemented in hardware, software, or a combination thereof, and can comprise a dedicated image processor and associated circuitry, or can be implemented within main processor 102.

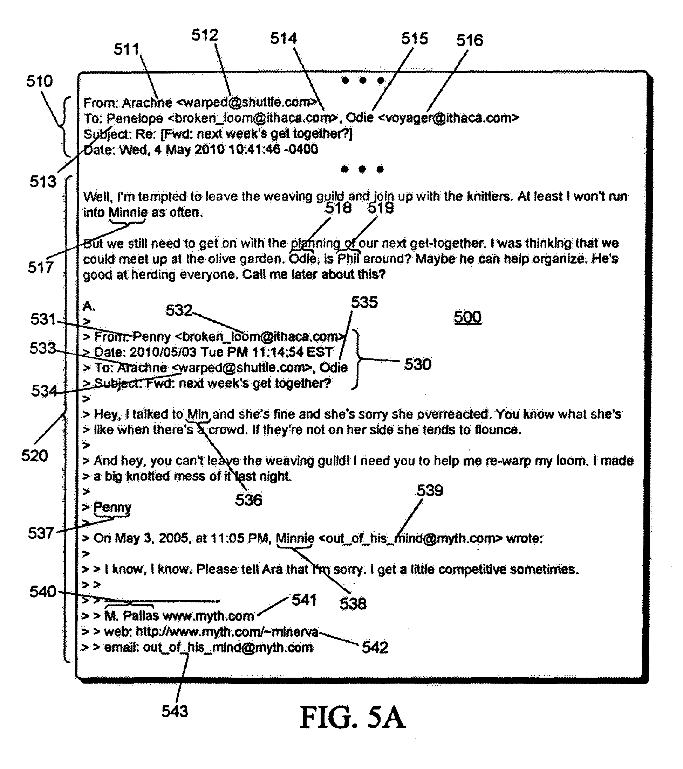

Turning to FIG. 5A, an example of typical content of an e-mail message 500 as may be received at the communication device 100 is shown. An e-mail message 500 is provided for illustrative purposes, although as noted above the embodiments described herein may be implemented with other data types and formats, including other messaging formats such as SMS messages, MMS messages, instant messages (server-based or peer-to-peer), and the like. The message 500 may be formatted and provided with content portions in accordance with established standards; for example, if the message 500 is an e-mail, the message may comply with the message format set out Internet Message Format RFC 5322 published by the Internet Engineering Task Force (IETF), and/or with its predecessor and successor standards. The message 500 may also comply with extensions to the base e-mail format such as Multipurpose Internet Mail Extensions (MIME) as set out in RFC 2045 to 2049, and contain content other than plain text. The example of FIG. 5A may be a plain text message. It will be appreciated by those skilled in the art that the content of the message 500 illustrated in the drawings is representative, and that the message may comprise other elements not depicted for clarity.

The message 500 comprises a header 510 and a body 520. The header 510 comprises, among other features, contact information for both the sender of the message (indicated in the "From:" line) as well as recipients, who may be direct recipients (indicated in the "To:" line) or copied recipients (such as recipients indicated in the "Cc:" line of a message, not shown). The contact information typically includes at least an address, in a format specified for that particular message format; thus, in the example e-mail of FIG. 5A, the address information follows a conventional e-mail address format. In the header 510, e-mail addresses 512, 514, and 516 are included as addressees of the message 500. The contact information in the header 510 may also comprise "friendly" names associated with the address. In FIG. 5A, the first e-mail address 512 is displayed in association with the friendly name 511, and similarly address 514 is associated with friendly name 513 and address 516 is associated with friendly name 515. The nature of the "association" between a friendly name and a corresponding address may be determined in accordance with applicable standards or conventions. For example, any friendly names associated with an address appearing in the message 500 may be located proximate to its corresponding address, and perhaps closer to its corresponding address than to any other address. Alternatively, it may be conventional for a plurality of addresses displayed in a single line in the header 510 to be separated by a delimiter such as a comma or a semicolon, and for any associated friendly names to precede its associated address within the delimiter. Thus, in the example of FIG. 5A, the friendly name-address pair 513-514 and the friendly name-address pair 515-516 are delimited by a comma.

The associated friendly name is an optional feature in e-mail communication, and may be inserted by a sending mail client when a message 500 is composed and transmitted to a recipient. The sending mail client may retrieve the friendly name and/or address information from a contact data store (not shown). The contact data store may comprise an address book accessible to the device executing the sending mail client application, or it may comprise a data store of addresses and optionally associated friendly names of recent contacts to whom the user of the sending mail client may have sent or from whom the client may have received messages. When the receiving mail client receives the message 500, the friendly name may be comprised within the header 510.

Alternatively, the friendly name may not be inserted by the sending mail client at all. When the message 500 is received by the receiving mail client on behalf of the message recipient, only addresses may be comprised in the header 510. However, when the message 500 is displayed by the receiving mail client, the client may retrieve associated friendly name information from a contact data store accessible to the device executing the receiving mail client application by matching the addresses in the message header 510 to contact data store entries comprising friendly names associated with the addresses. Any found friendly names may be inserted by the receiving mail client when the message 500 is displayed at the device 100 executing the receiving mail client.

The message body 520 typically contains user-entered content. The content of the message 500 may expressly or impliedly refer to other individuals or entities, whether the sender or a recipient of the message 500, or a third party who is not an addressee or a sender of the message 500. These addressees, senders, or third parties may be referenced by name in the body of the message 500. In the example of FIG. 5A, three proper names 517, 518 and 519 are included in a first portion of the message body 520. In this example, the proper names are names of individuals. The mention in the message body 520 is the first occurrence in the message 500 for two names ("Minnie" and "Phil" 517 and 519, respectively). The third name ("Odie" 518) is first introduced in the message header 510 at 515. It will be understood by those skilled in the art that the content of the message body 520 may be directed to any subject; thus, references to third parties need not be limited to persons. The third parties referenced in the message body 520 may be corporate entities or other types of organizations. Further, the content of the message body 520 identifying third parties need not be limited to a mention of the third party's proper name. The composer of the message 500, for example, may choose to insert e-mail addresses, phone numbers, or other identifying information for the third party instead of, or in addition to, a proper name.

If the message 500 is a "child" message, that is, a message created in reply to a previous message or a message forwarding all or part of a previous message, the message body 520 may contain additional data from that previous message. The additional data may include either header information, message body content, or both, from the previous message; it may either be inserted in the message body 520 itself, or provided as an attachment to the message 500. In the example of FIG. 5A, additional content taken from a previous message is replicated in the message body 520, set off as quoted text preceded by a delimiter (indicated by a greater-than sign ">"). Other delimiter symbols, or no delimiter at all, may be used. The previous message content included in the body 520 may comprise all or part of the previous message. In the message 500, the previous message content includes header information 530, which includes names 531, 533 and 535. An associated address may be provided in the header information 530 as well. The associated address may be an address of a sender and/or a recipient of the previous message; in this example, a proper name 531 is accompanied by an associated address 532, and a proper name 533 is accompanied by an associated address 534. The proper name 535 is not provided with a corresponding address. In some embodiments, the names 531, 533 or 535 may appear in the body previous message header 530 without any associated address. For example, one name 535 does not appear with an associated address. Conversely, addresses may be provided in the previous message header information 530 without any associated friendly or proper name.

When the message 500 is composed at a sending mail client, the sending mail client may automatically insert the content from the previous message, and format each line of the inserted content with a delimiter, if the client is configured to insert the delimiter. The extent to which the header information 530 is inserted into the message 500 may be determined by configuration settings applied to the sending mail client. For example, in some embodiments, no header information may be inserted at all; in other embodiments, only brief header information may be inserted, merely indicating the identity of the sender and the timestamp of the previous message. In still other embodiments, more robust header information may be inserted, such as shown in FIG. 5A.

In addition to the replicated parent message header information 530, the message body 520 may include all or part of the message body replicated from the parent message. In this example, further proper names or possible proper names 536, 537 are provided in this portion of the content. This message 500 further comprises additional content that may be replicated from still a further previous message, as indicated by the content in the message body 520 set off by a double delimiter (two greater-than symbols "> >"). In this still further replicated content, it can be seen that additional names 538, 540 and corresponding addresses 539, 541 are included. The friendly or proper name 538 and the associated address 539 are provided in a portion of the message body 520 that may be a header of the still further previous message.

The association between any friendly or proper names and a corresponding address, such as the name-address sets 531-532, 533-534 and 538-539, may be identified as described above either by their proximity, or because of their placement within a predefined delimiter. In some embodiments, the associated name and address need not be located on the same line within the message 500. Moreover, a name may be associated with more than one address, and the address need not be an address typically used for the format of the message 500. For example, the proper name 540 may be associated with both the address 541 and the address 542; the second address 542 is not in a format associated with e-mail messages, but is rather a uniform resource indicator (URI). The name 540 and the addresses 541, 542 are located on different lines. The name 540, however, may be considered to be associated with the addresses 541, 542 because of their vertical proximity within the message 500.

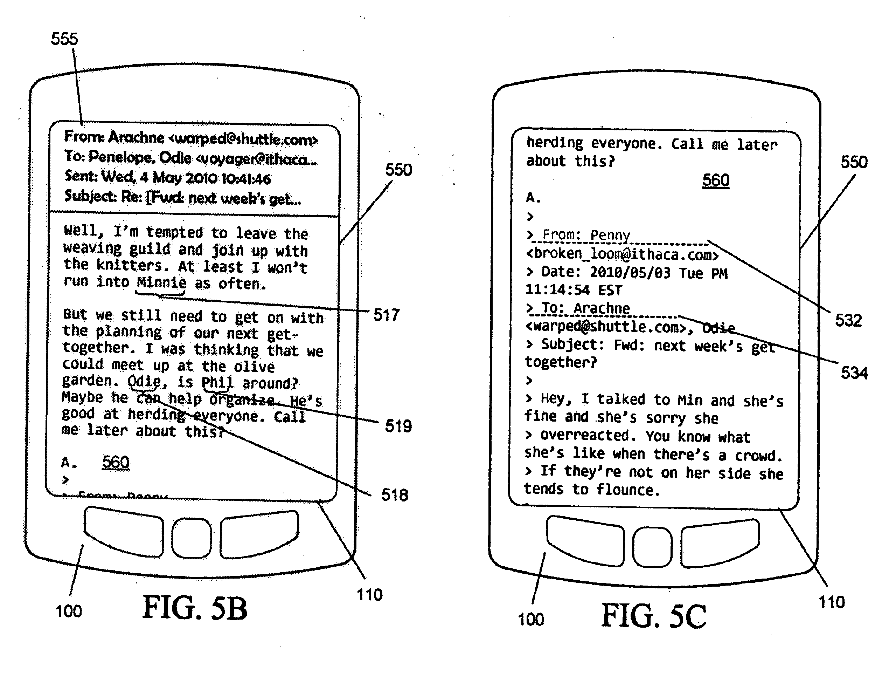

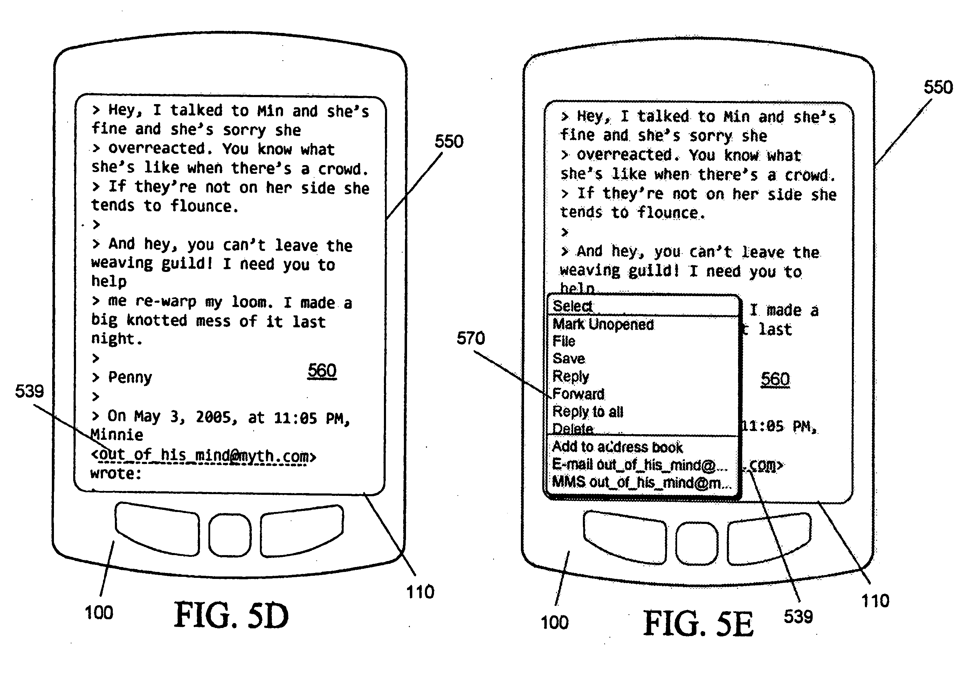

The total length of the message 500 is generally determined by the composer of the message, and the effect of any previous messages that are replicated within the message 500. When a long message is displayed on a communication device 100 with limited display area 110, such as on a smartphone, the entire message 500 may not be visible in a single view on the display 110, i.e. without scrolling or panning through the message content to view portions of the message 500 not currently displayed. Turning to FIG. 5B, an example of a graphical user interface 550 displaying the message of FIG. 5A is shown. In this example, information taken from the header 510 is displayed in a header display region 555, and the content of the message body 520 is displayed in a content display region 560. As can be seen in a comparison with FIG. 5A, not all of the content of the message is readily viewable on the display 110. To view additional content, a scrolling or page down command may be invoked to display other portions of the message 500 on the display 110. The implementation of scrolling or other page down techniques will be known to those skilled in the art. Examples of subsequent views of the same message 500 as a scrolling or page down technique is applied are shown in FIGS. 5C and 5D.

It will be noted that in this embodiment, the header display region 555 is scrolled off the top end of the display 110 as further portions of the message 500 are displayed in FIGS. 5C and 5D. In other embodiments, not shown, the header display region 555 may remain static, and only the content of the content display region 560 may be scrolled. The direction of scrolling in these examples follows the direction of reading from top to bottom; in other embodiments, to read through the message 500, the direction of scrolling may be from bottom to top, or side to side. Regardless of which of these embodiments is implemented, a disadvantage to this method of displaying the message 500 is that if a particular portion of the message 500 is of particular interest to the user, but that portion is not readily visible in an initial view of the message 500 on the display 110, the user must scroll through the content to locate the portion of the message 500 of particular interest.

The messaging client displaying the message 500 may be configured to respond to message composition commands when names or addresses displayed in the header display region 555 are brought into focus and actuated. Returning to FIG. 5B, the client may be configured to permit focus to be moved between the header display region 555 and the content display region 560, and when in the header display region 555, focus may be movable between the names and/or addresses shown in the header display region 555. When an element is in focus, the messaging client is able to accept commands in association with that element; for example, if focus is moved to an e-mail address in the header display region 555 in response to a user navigation command, the address in focus may be actuated (for example by a key press or other user input signal) to initiate an instruction to the messaging client, with the address comprising an input or parameter of the instruction. The messaging client, upon detecting this instruction, may respond by generating a new message for composition, inserting the actuated address as the recipient of the new message. This provides a convenient means for a user of the communication device 100 to compose a message addressed to that recipient without being required to manually input the name or address of the recipient, or locating the recipient in an address book or other contact data store.

The messaging client may also be configured to automatically scan the message body 520 for patterns indicative of a messaging address. For example, since e-mail addresses generally follow conventions set out in standards such as RFC 5233 and other references, the format of a typical e-mail address consists of localname@domain. Thus, the messaging client may invoke a process that scans the message content for any string, set off by white space, of characters with an at symbol ("@") located in an intermediate position in the string. Any such string may be interpreted as an e-mail address. The process may also carry out validation of the string to ensure that it forms a legal address; for example, the process may verify that all characters in the string form part of an acceptable character set or subset, and that the address terminates with a top-level domain. If an e-mail address is found within the message body 520, the messaging client may be configured to render the address focusable within the content display region 560 in a manner similar to the addresses provided in the header display region 510. As shown in FIGS. 5C and 5D, these addresses 532, 534, 539 may be distinguished from the other content of the message body 520 to visually indicate that it is focusable, for example by underlining the address (as shown in the figures), inserting a small icon indicating that a function is available in association with the address, or displaying either the letters or background of the address in a different colour. Focus may then be moved to this address, and the address then actuated with results similar to those described above. Thus, the user may easily initiate composition of a message addressed to a recipient whose e-mail address appears in the message body 520.

An example of this is provided in FIGS. 5D and 5E. In FIG. 5D, the underlined address 539 is focusable. If it is actuated, a menu 570 may be displayed overlaying the graphical user interface 550 as shown in FIG. 5E. The menu includes a number of generic functions, such as "file", "save", "reply", and so forth, which may not be specific to the particular address in focus and actuated. Other functions, such as "E-mail" and "MMS", may be provided in the menu 570, thus giving the user the option to initiate composition of a message addressed to the identified address.

In the example of FIG. 5C, the second underlined address 534 is in fact an address comprised in the header 510 of the message. Thus, there are two instances of that address that may be focusable and actuatable, providing the user with a choice of two points in the user interface that may be focused and used to invoke a message composition command, automatically addressing the message to that address. However, as can be seen in FIG. 5D and by comparison to FIG. 5A, the underlined address 539 found in the body 420 is towards the end of the message 500 and is not comprised in the header 510 at all. Thus, when the communication device 100 has a display of limited size, the user may be required to scroll or page through nearly the entire message to find the desired e-mail address 539 to invoke the message composition command, or else invoke a message composition command separately and manually key in the address 539.

Further, in some circumstances, the address of a potential recipient of interest to the user of the communication device 100 may not be provided in the message header 510 or body 520 at all. Returning to FIG. 5B, for example, proper names purporting to refer to individuals 517, 518, 519 are shown in the message display region 560, but because these are not addresses, these names may not be recognizable by the message client as potential contact names to whom messages may be addressed. Accordingly, in a further embodiment, the messaging client may be configured to scan, or initiate a separate process to scan, the message body 520 for content matching a pattern associated with a contact name.

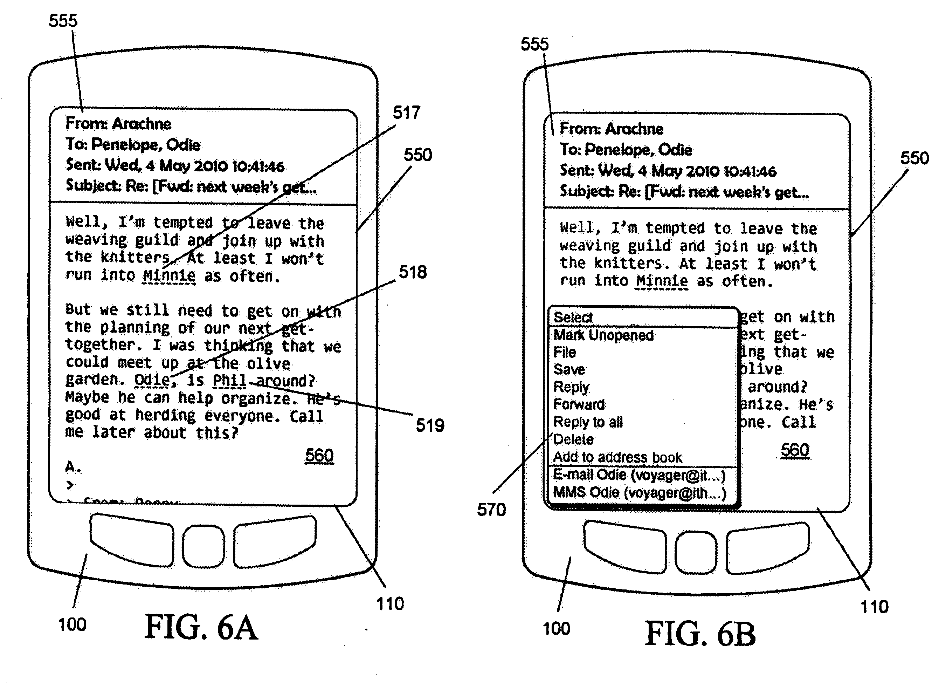

Turning to FIG. 6A, an exemplary graphical user interface 550 is shown, in which a process has been implemented to detect strings in the message body displayed in the message display region 560 that match patterns or character strings identified as typical strings or patterns representing proper nouns. Upon recognition of proper nouns within the message body, the process attempts to match each of the recognized proper nouns with a contact address. Further details of the pattern or string matching, and the address matching, are discussed below. If an associated contact address is identified for the recognized proper noun, then the proper noun is associated with that contact address. For ease of identification, contact names found within the message body, i.e., recognized proper nouns that are associated with a contact address, may then be distinguished from the surrounding content in the message display region 560 in a similar manner to that described above. In the example of FIG. 6A, the names 517, 518, and 519 have been recognized and matched to a corresponding address, and have been visually distinguished from the remaining text by underlining. It will be noted that in the examples of FIGS. 6A through 6F, the header display region 555 does not display the entire content of the header 510; rather, only contact names associated with contact addresses in the header 510 are displayed. However, the names within the header 510 remain associated with their corresponding addresses.

Further, each of these recognized and matched names are rendered actuatable in the device display 110 in a similar manner as described above in respect of addresses. Thus, when one recognized and matched name, such as the name "Odie" 518 in FIG. 6A, is in focus in the graphical user interface 550, either it may be actuated to launch a further action on the communication device 100, or a context menu may be invoked to provide for the selection of one or more actions associated with the name 519 and its associated address. Turning to FIG. 6B, an example of a context menu 570 that may be invoked in response to a command detected while the name 518 was in focus is shown. This context menu 570 may include options for general actions that are not related to the specific name 518 or associated address. For example, the "Select" action may be an editing command to permit selection of a block of text within the display area 560, and the "Mark Unopened", "File", "Save", and "Delete" actions may operate on the message itself, and not the specific selected text or name in focus. The "Reply", "Forward", and "Reply to all" actions may operate on the message itself; while these actions, which involve composing a message in reply to the message being viewed or forwarding the message to a designated recipient, involve the use of at least one address (since the reply or forwarding message must be addressed to some recipient), that address is not necessarily the address associated with the name 518.

In addition to these general options, some options specific to the name 518 in focus and its associated address may be included in the context menu 570. In the example of FIG. 6B, the context menu 570 may list the actions of "E-mail Odie (voyager@ithaca.com)" and "MMS Odie (voyager@ithaca.com). In FIG. 6B, the names of these actions are truncated because the context menu 570 viewing area is not large enough to accommodate the entire action name on a single line. These actions represent two possible actions that may be taken using the address associated with the name 518 as an input. If the former action is invoked, then the communication device 100 may launch a message composition application or view for composing a message, with that address inserted as a recipient of the message to be composed. Optionally, this action may operate as a "Forward" command, in which a copy of the current message is appended or attached to the new message to be composed, and the new message is automatically addressed to that associated address. If the latter action is invoked, the communication device may launch a MMS composition application or view for composition of an MMS message, automatically addressed to that associated address. In addition, the context menu 570 may include an "Add to address book" option, in which the selected name 518 and its associated address are automatically inserted into a new address book entry at the device 100, or automatically merged with an existing, matching address book entry at the device 100. Invocation of the "Add to address book" command may also invoke an address book entry editing application or view at the device 100.

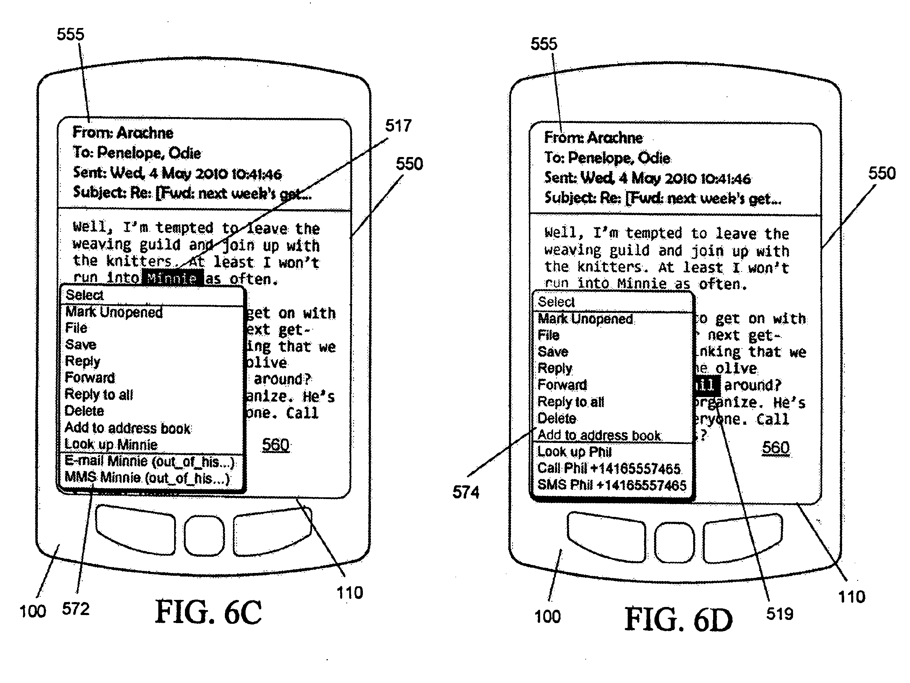

Because it is possible that a recognized proper noun in the message body may be associated with an incorrect address, the context menu may be provided with an option to look up a correct address for that proper noun. FIG. 6C illustrates an example of the graphical user interface 550, in which the name "Minnie" 517 is in focus, and a context menu 572 has been actuated. The context menu 572, in addition to providing options for composing an e-mail or MMS message to an address automatically associated with the name 517, also includes an option for a command to "Look up Minnie". Invocation of this command may launch a search function on the communication device 100 for searching an address book for entries matching "Minnie". If a matching address book entry is found, in response to a further command an address in this matching address book entry may be associated with the name "Minnie" 517 in the message displayed in the user interface 550.

The addresses to be associated with a name identified in the message body may be found in the message body 520 itself or in the message header 510 itself, as described below. In some cases, however, there may not be an address apparently corresponding to a proper name identified in the message body 520. In those cases, after recognizing a string as a proper name, the process may automatically search an address book or other contact data store available to the communication device 100 for an entry matching the string. The recognized proper name may then be associated with one or more addresses found in the address book or other contact data store. In the example of FIG. 6D, a proper name 519 is in focus, and a context menu 574 invoked while that proper name 519 is in focus shows that the name 519 has been associated with a telephone number, so that the context menu 574 lists options for calling that number or sending an SMS message to that number. Thus, the address associated with the name identified in the message body 520 may be an address that is used for addressing messages using a different transport or protocol than that typically used for the message being displayed. In further embodiments, where multiple contact addresses are available for a name recognized in the message body 520, the process may determine which type of contact address to display in the context menu 574 based on disambiguation hints found within the context of the name in the body 520. A disambiguation hint may be a word or phrase relating to a specific message transport or format type. For example, if the word "call" was found near or immediately preceding the name 519, the context menu 574 may be presented to display only telephone numbers associated with the name 519, but if the words or phrase "mail" "send" or "write to" were found within the proximity of the name 519, an e-mail address may be displayed in the context menu 574, if an e-mail address is available.

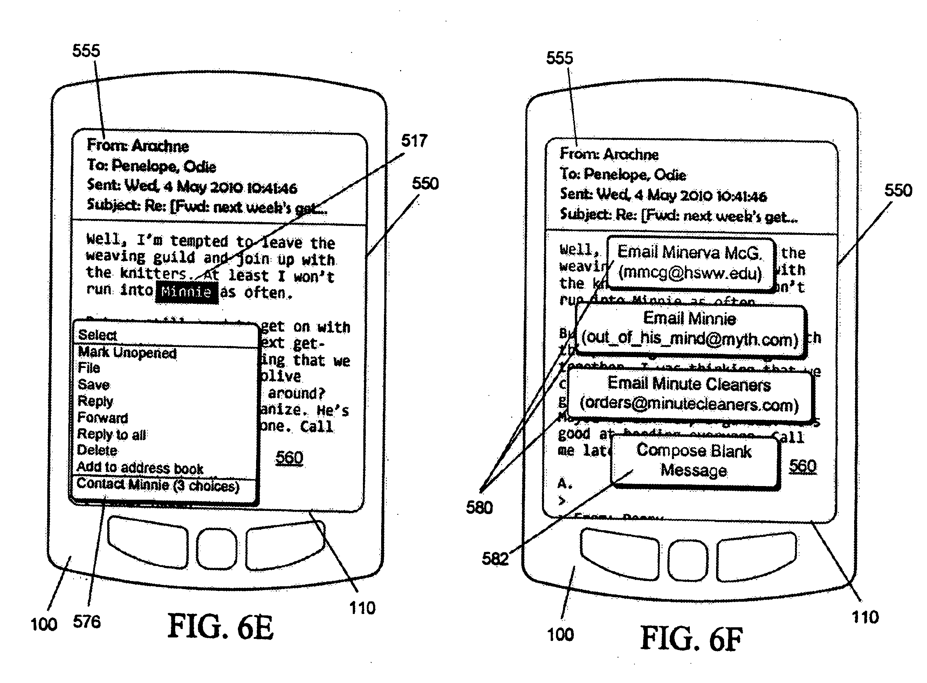

In a further embodiment, if an address book or other contact data store is used to identify an appropriate address for association with a name in the message body 520, it is possible that no exact match may be found, or that more than one entry in the address book or other store may be found to be a match for the name. Although the message body 520 may be searched for disambiguation clues to narrow down the possible matches to a single match, in this further embodiment disambiguation is carried out via the user interface 550. Turning to FIG. 6E, a name in the message body 520 (here, "Minnie") may have been identified as an exact or approximate match for more than one address book entry. When the name is in focus and a command to invoke a context menu is received, the context menu 576 may be displayed, with a menu option to provide for contacting this contact name, but indicating that a number of choices are available. If this option is selected, the user interface 550 may display a set of options 580 as shown in FIG. 6F, providing the user with an option to select one of a number of possible contact addresses. If one of these contact addresses is selected, then the device 100 may store the selected contact address in association with the name. If none of these contact addresses is determined to be correct, then an option 582 to compose a blank message without an addressee automatically filled in may be selected.

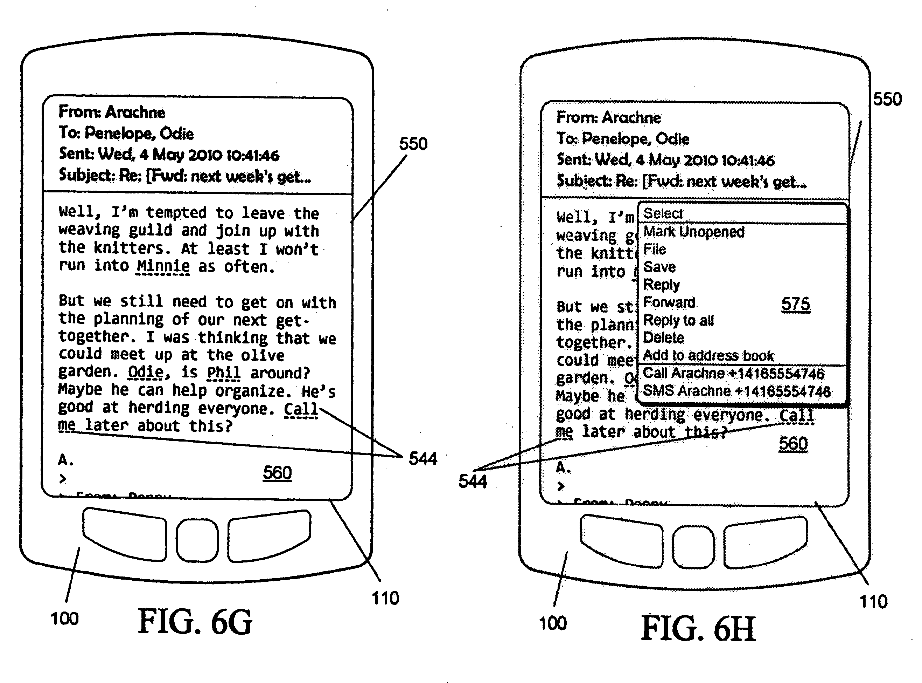

In another variation, other strings comprising personal pronouns, such as "me", "myself", "us", or "ourselves" may also be identified within the message body, associated with a contact address, and rendered actuatable in the user interface 550. Since the writer of a message may refer to him or herself using various forms of the first-person singular personal pronoun, occurrences of "me" and similar language in the message body 520 may be recognized and associated with the contact address of the sender of the message 500. In some instances, the writer of a message may be writing on behalf of an organization or group, and may make use of first-person plural pronouns, such as "us" or "ourselves". Such instances in the message body 520 may therefore also be recognized and associated with the contact address of the sender. In addition to recognizing personal pronouns within the message 500, verbs or other terminology representing modes of contact that are present in the context of the personal pronoun may also be recognized as well (e.g., "call", "message", "text" or "email" in a phrase such as "call me"), and may be used to configure a context menu that is invoked in respect of the identified pronoun. FIG. 6G illustrates another view of the user interface 550 displaying the same message 500, in which the phrase "Call me" 544 has also been identified and rendered actuatable. In FIG. 6H, the identified phrase 544 has been brought into focus and actuated to invoke the display of a context menu 575 similar to those described above. In this example, the context menu 575 shows that the phrase 544 has been associated with the message sender, and includes options to either call or transmit a SMS message to the sender. The modes of contact listed in the context menu 575 (voice call or SMS) may be selected by the communication device 100 based on the identification of the word "call" preceding "me" in the identified phrase 544. The telephone number associated with the sender may be retrieved automatically from an address book or other contact data store available to the communication device 100, as described with reference to FIG. 6D. If, however, no appropriate contact number for the sender is available to the communication device 100, the context menu 575 may instead display an option to e-mail the sender at the contact address included in the message header 520.

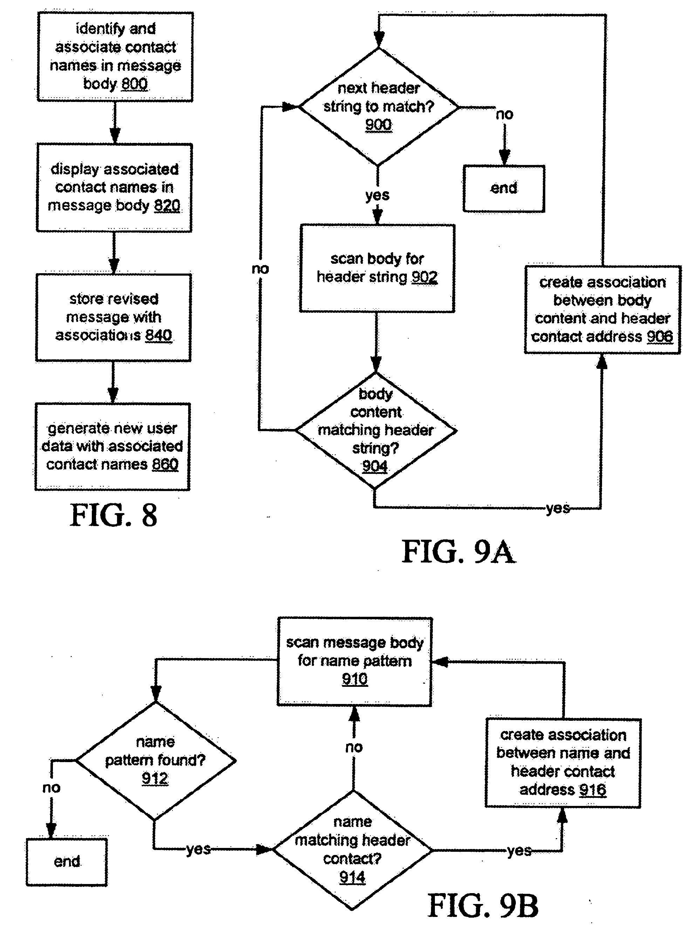

A general method for identifying proper names and associating the identified names with contact addresses is illustrated in the flowchart of FIG. 8, and further detail of each portion of the method is illustrated in FIGS. 9A through 10B. At block 800, the process identifies proper names that are potentially contact names in the message body, and the identified names are associated with an address, if possible. The process may also identify personal pronouns and associated verbs or terminology indicating a mode of contact, as described above with reference to FIGS. 6G and 6H. At 820, when the message is displayed in a user interface at the device 100, the names, pronouns or phrases that were identified and associated with addresses may be displayed in the message body 820, in a manner that distinguishes these contact names from other content in the message body. At 840, the message is stored, at least temporarily, in association with the contact names identified in the message body and their associated addresses. In some embodiments, the message with this associated information may be stored on a less transitory basis, as discussed below. Finally, at 860, in response to a command the device 100 may generate new user data, for example a new message, using a contact name and its associated address. The steps of identifying and associating names with addresses, and storage of the message in association with this information, may be carried out either before or after the message itself is displayed at the communication device 100.

The process of identifying proper names and associating any recognized names with an address is described with more detail with reference to FIGS. 9A to 9E. After a message 500 is initially stored at the communication device 100, for example after receipt of the message 500 or after the message is composed at the communication device 100, content in the message body 520 is correlated with contact addresses..

The identification of such content may be carried out a number of ways. In a simple embodiment illustrated in FIG. 9A, text strings in the message body 520 are matched to text strings in the header 510 and correlated to a contact address in the header 510. As noted above, the header 510 of a message 500 may comprise contact addresses, such as the addresses 512, 514, 516 of FIG. 5A. These addresses may be associated with a name (e.g. names 511, 513, 515 respectively), due to their proximity to the name in the header as displayed, or alternatively because the names and corresponding addresses are associated as name-address pairs within the header 510, whether the names or addresses are displayed at the device 100 or not. The addresses may also be associated with a name through an address book or a contact data store available to the communication device 100, since the address book or contact data store may comprise an entry associating the address with a name. At 900, a string is identified in the header. The string may comprise a single word in the header, a plurality of words, or a predetermined number of characters in the header 510. The string may comprise the local part of an address (for example, in a typical e-mail address, the portion preceding the "@", such as "warped" in address 512). Thus, using the example of FIG. 5A, the header string may comprise character strings such as "Arachne", "warped", "Pene", and "broken". Selecting strings other (e.g., shorter) than the entire friendly name 511, 513, 515 or entire local part of an address increases the likelihood that a match will be found between header 510 content and body content 520, since the writer of a message may not refer to an addressee by their entire proper name. If the string is selected to be a predetermined number of characters in the header 510, the number of characters may be selected to have a minimum length that is more likely to yield a useful match in the message body 520. For example, selecting only a three-character-long string, such as "bro", may result in a number of matches to message body words containing the sequence b-r-o that do not refer to a potential addressee.

At 902, the body 520 of the message is scanned for a string matching the identified header string. The scanning and matching process may be case-insensitive, and multiple matches may be found. If it is determined at 904 that there is no match, then the process returns to 900, where a further string is selected from the header for matching. For example, if the string "Pene" were selected from the header 510, no match to "pene" would be found in the body 520 of the message, and a further string, such as "Odie", may be selected from the header 510. If there are no further strings, the process ends.

If it is determined at 904 that there is a match between the header string and a string in the message body 520, then at 906 an association is created between the matching string in the message body 520 and the contact address associated with the selected header string. The identification of the contact address may be carried out by referring to the header 510 for the address comprising the header string, if the header string was taken from an address, or for the address associated with the name or text comprising the header string. Thus, for example, if the string "odie" were identified in the header 510 were searched in the message shown in FIG. 5A, two instances of this string would be found in the message body 520. When these matches are found, they are then associated with the contact address "voyager@ithaca.com" 516, since the identified string was selected from text associated with this contact address 516 in the header 510.

This association may be temporarily stored in memory at the communication device 100, for example while the message 500 is being displayed on the device 100. Alternatively, this association may be stored in an information store, such as the message store, in association with the message. The association may be recorded as an entry or record comprising the header string and corresponding address.

In another embodiment, strings or words are identified in the message body 520 that correspond to a predefined pattern that is associated with proper nouns. Methods of pattern matching will be known to those skilled in the art. For example, in a simple proper name-identifying embodiment, a pattern for a proper noun may be defined as a sequence of words (e.g., a sequence of strings of letters preceded or followed by either a space or a punctuation mark) comprising at least one word, in which the first letter of each word is in upper case while the remaining letters of each word are in lower case. In addition, words appearing completely in upper case, because they may comprise acronyms or company names, may also be recognized as potential proper nouns. This basic pattern match may identify the first word of every sentence as a potential proper noun, so in some embodiments, once such words have been identified by pattern matching, each identified word may be compared against a lexicon to determine whether it is properly identified as a proper name. The lexicon may comprise a dictionary file stored on the device 100 and used for spellchecking functions on the device 100, a file containing recognized common nouns, or a file containing recognized proper nouns. Alternatively, each identified word may be compared against names in an address book or other contact data store accessible to the device 100, and matches to those names may be assumed to be proper nouns. When a match of a string from the message body 520 is found to match more than one name in an address book or other contact data store, additional characters appearing in the same context as the identified string may be used to disambiguate between the names. For example, the pattern matching process may identify single-letter words preceding the identified proper noun as possible first initials preceding a last name (e.g. "A Cooper" or "A. Cooper"), and similarly, single-letter words following an identified proper noun may be a last initial following a given name.

In another embodiment, algorithms may be implemented to distinguish nouns in the message body 520 from other parts of speech, compare the identified nouns against a lexicon of common nouns, and then identify any nouns not found in the lexicon as a proper noun and thus a potential contact name in the message body 520. Alternatively, every word or combination of words within each line of the message body 520 may be compared against a lexicon of proper nouns stored in the memory of the communication device 100, or against entries of the address book stored at the communication device 100. The comparison of names to a lexicon, address book or other contact data store may be carried out on the basis of an exact match, or a loose or approximate match, for example using a phonetic algorithm that provides for indexing and matching of words based on sound, such as a Soundex algorithm. In addition, a lexicon or other data store may also comprise possible diminutive forms for names, i.e. "nicknames", which may be used in place of a formal proper name (for example, "Minnie" may be a diminutive form of "Minerva"). Similarly, abbreviations or acronyms for other entities, such as companies, may be included in the lexicon or other data store. Any one, or a combination, of the foregoing methods may be used to identify likely proper nouns in the message body 520, or any other suitable method may be used.

Thus, turning to FIG. 9B, at 910 the message body is scanned for character strings likely to comprise a proper name or a contact name. If it is determined at 912 that no proper name has been identified (or no further proper name has been identified) in the message body 520, then the process ends. If it is determined at 912 that a string matching a proper name or proper name pattern has been found in the message body 520, it is then determined at 914 whether the proper name found matches a contact identified in the header 510 of the message. If it does not, then the process returns to 910. As noted above, the header 510 of a message 500 may comprise contact addresses, such as the addresses 512, 514, 516 of FIG. 5A. These addresses may be associated with a name (e.g. names 511, 513, 515 respectively), due to their proximity to the name in the header, or alternatively because the names and corresponding addresses are associated as name-address pairs within the header 510, whether the names or addresses are displayed at the device 100 or not. The addresses may also be associated with a name through an address book or a contact data store available to the communication device 100, since the address book or contact data store may comprise an entry associating the address with a name.

Thus, using the example of the message 500 in FIG. 5A, a string comprising the proper name "Minnie" 517 may be identified in the message body 520. It is then determined whether a match exists in the message header 510. In this case, there is nothing in the header 510 matching the string "Minnie" or "minnie". Therefore, the process returns to 910, and the message body 520 is scanned for a further proper name match. The second match in the body 520 is "Odie" 518.

Once a match is detected at 912, the process again returns to 914 to determine whether the name matches a contact in the header 510. In this example, a scan of the message header 510 may indicate that one contact name in the header 510 matches the string comprising the name 518, and that this contact name is associated with a contact address. In this case, the contact name-address pair is "Odie" 515 and "voyager@ithaca.com" 516. To arrive at this match, data other than the message header 510 may be inspected. For example, if messages at the communication device 100 are stored in a message data store, the message data store may store information concerning addressees of a message separately from the actual message 500 itself, so the process may inspect this additional information record to determine whether the name 518 matches any contact name in the header. Again, the match may be an exact match, either case-sensitive or case-insensitive (i.e., "Odie" 518 or "odie" must find an exact match in the header or the additional information record), or it may be a looser or Soundex match, or a match that allows for variations and diminutive versions of names to be correlated (e.g., "Odie" may match "ody" or "Odysseus").

The match may also be carried out against the contact address itself within the header 510, even if there is no friendly name accompanying the contact address in the header 510. For example, a recipient or addressee's e-mail address may include a string of characters matching or resembling the recipient or addressee's given or last name, so it may be possible to match the name found within the message body 520 against the address. In a further embodiment, rather than attempting to match the name 518 against the names comprised in the header 510 and thereby forge an association between the name 518 and an address from the header 510, the process may instead query an address book or other contact data store for further data associated with one or more addresses comprised in the header 510 to determine whether there is a proper name or friendly name associated with that address matching the name 518. If such a match is found, then the name 518 is associated with that contact address.

If at 914 it is determined that there is a match, then at 916 an association is created between the name 518 in the message body and the contact address 516 from the header 510. This association may be temporarily stored in memory at the communication device 100, for example while the message 500 is being displayed on the device 100. Alternatively, this association may be stored in an information store, such as the message store, in association with the message. The association may be recorded as an entry or record comprising the name 518 and the address 516.

The step 910 of scanning the message body to identify potential proper nouns that may constitute contact names in the message 500 may be carried out at once for the entirety of the message body 520. Alternatively, the process may move to step 912 after each individual proper name is identified in the message body 520.

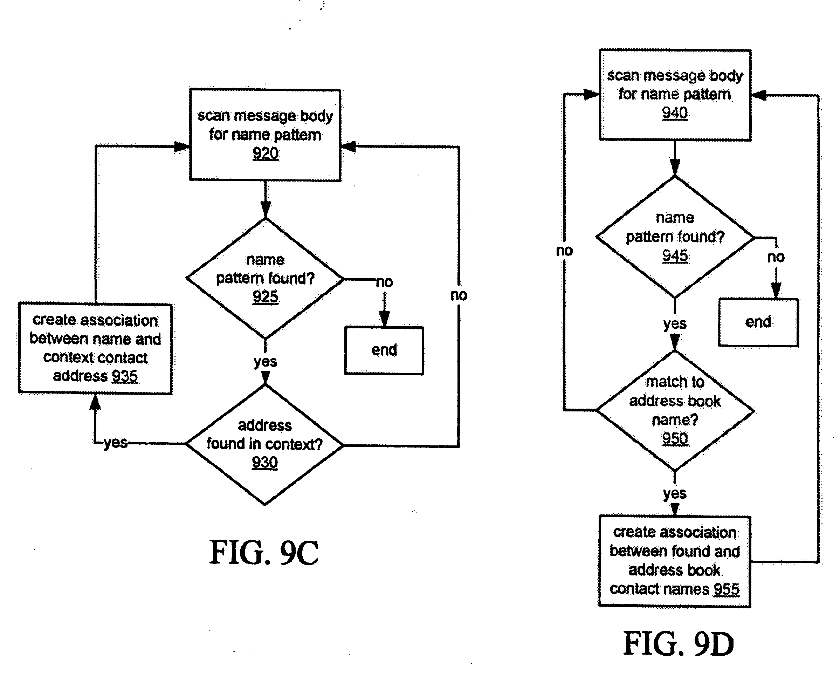

The foregoing process provides for the correlation of a proper name identified in the body 520 of the message 500 with a contact address from the header 510 of the message 500, thus resulting in identification of a contact name in the message body 520 associated with a contact address. In some embodiments, however, an associated address need not be located in the header 510. It may be located elsewhere in the message body 520. Thus, turning to FIG. 9C, a process for associating names with addresses within the message body 520 is illustrated. The process begins at 920, where the message body 520 is scanned for content matching a predefined pattern corresponding to a name, as described above. If it is determined at 925 that no match (or no further match) to the contact address pattern was found within the body 520, then the process ends. If a match is found, then at 930 the process scans the surrounding context of the recognized name-for example, the line in the body 520 comprising the name, as well as the line immediately preceding the name and the line immediately following, or alternatively a predetermined number of characters preceding or following the name-to determine whether a contact address is present.

The identification of a contact address in this process, and in the other processes described herein, may comprise matching a string in the context to a predefined address pattern. An example of a pattern for an e-mail address was described previously. The process may scan for other types of patterns matching other types of contact addresses, such as patterns of numeric or alphanumeric strings matching typical patterns for telephone numbers, URIs, communication device identification numbers or addresses, and the like. If e-mail or e-mail type messages are sent between the communication device 100 and another recipient device within an enterprise, the enterprise network may utilize a particular address format for messages sent within the network, and the process may scan for addresses matching the pattern of that address format as well.

If at 930 it is determined that no contact address is comprised within the context, then the process returns to 920. Otherwise, if a contact address is found, then at 935 an association is created between the recognized name and the contact address thus found, and the process may return to 920 to scan for the next name in the body 520. This association between the recognized name and the contact address is premised on the assumption that an address inserted in the body of a message in close proximity to a proper name is likely an address for use in addressing messages to the individual with that proper name. For example, the message body 520 may read in part, "Contact Alice by Friday at alice@exampledomain.com", which to a reader would typically indicate that Alice's e-mail address is alice@exampledomain.com, even though the name is not immediately adjacent the address. In another example, the message body 520 may include a header from a previous message if the message 500 is a message forwarding or replying to a previous message, so it is possible that a replicated header from a previous message may comprise both a name and a contact address in close proximity, or within the same set of delimiters, similar to the header 510 of the message 500.

Examples of such names and addresses within a message body 520 are illustrated in FIG. 5A. For example, name 531 and address 532 are contained within a replicated header 530 from a previous message, which is included within the body 520 of the message 500. Following the method in FIG. 9C, at 920 the message body is scanned, and at 925, the name found may be the name "Penny" 531. (It will be appreciated by those skilled in the art that the scanning and associating process may have already been carried out in respect of any other names in the message 500 occurring prior to the name 531.) At 930, the context of the name within the body 520 is scanned for a pattern matching an address. For example, the line containing the name 531 may be scanned. As a result, the address 532 may be identified. Based on the fact that the address 532 was found within the defined context range, it is concluded that the name 531 and address 532 are associated, and so an association between these two elements of the message 500 is stored at 935, as above.

As another example, during subsequent scanning 920 of the message body 520, a further name pattern match may be found, such as "M. Pallas" 540 in FIG. 5A. To those skilled in the art, the line of the message 500 comprising this name 540 and the following two lines are generally recognized as comprising a message "signature", typically a text and/or graphical insertion comprising information personal to or related to a sender of a message that is normally appended to the end of a message sent by that sender. Thus, the skilled reader will understand that the addresses comprised on the same line as the name 540, and on each of the following two lines, are likely intended to be associated with the name 540. If the process is configured to scan surrounding lines of the message body 520 to identify contact addresses associated with a recognized name in the body 520, the scan may extend to the lines following the name 540 within the body 520. Accordingly, the process may identify one or more of the addresses 541, 542, and 543 in the message body 520 as being associated with the name 540.

Thus, the foregoing process provides for the correlation of a name identified in the body 520 of the message 500 with a contact address also identified in the body 520 of the message, thus resulting in identification of a contact name in the message body 520 associated with a contact address. In further cases, a proper noun may be found within a message, but with no apparent associated address. The process may instead attempt to correlate the name with an address from the address book or other contact data store, as shown in FIG. 9D. The process may scan the message body 520 as described above at block 940. If it is determined at 945 that no match (or no further match) was found, then the process ends. If a match is found, then at 950 the process determines whether there is a match of the name to an address book or another contact data store. As described above, the search may be based on an exact match and/or a Soundex match, and may further use disambiguation as described herein. If the match exists, then at 955 an association is created and stored between the recognized name in the body 520 and an address from the address book or contact data store. Accordingly, a contact name can be identified using an address book or other contact data store available to the device 100. If no match exists, then the process may return to the scanning step.

Referring to FIG. 5A, the process may scan the body 520 at block 940 of FIG. 9D, and determine at 945 that the name "Phil" 519 matches a name pattern. At 950, the process may then match the name 519 to an entry in an address book or other data store. If a match is successful, then an association is created between the name 519 and a contact address from the address book or other data store. In the example of FIG. 6D, it can be seen that this name 519 was associated with a telephone number.

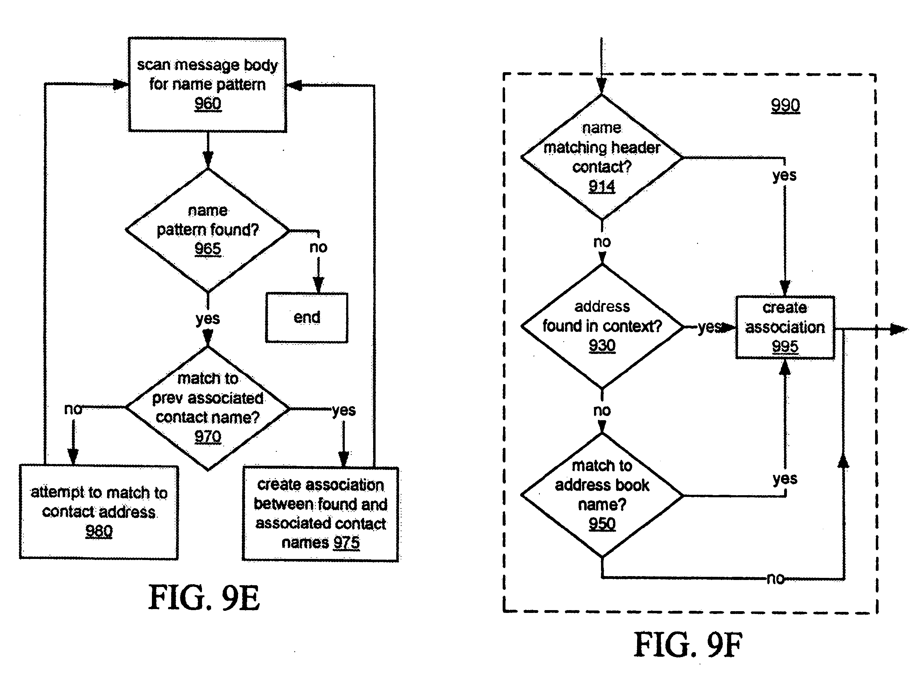

The foregoing processes may be carried out sequentially or concurrently. In addition, the message may include multiple references to the apparent same individual or entity within the body 520. Thus, as shown in FIG. 9E, a process is provided that combines the various match steps described above, and further enhances the consistency of results in associating a recognized name in the body 520 with a contact address. At 960, the message body 520 is scanned for a pattern for a name, as described above. If it is determined at 965 that a match is found, then at 970, then it is determined whether a preceding portion of the message body 520 comprised the same name. If it is apparently the first time the recognized name has appeared in the message 500, then at 980 the process attempts to match the recognized name to an address using one or more of the alternative methods described above. Whether the association between the name and a contact address is successful or not, the process may then return to 960. If, on the other hand, the recognized name had appeared previously in the message 500, it may be assumed that the previous instance of the same name had already been processed in accordance with one of the methods described herein. In that case, the process may match the most recently found instance of the name and the corresponding contact name that was previously identified, thus associating the most recently found instance of the name with a contact address.

Referring again to FIG. 5A, the process may scan the message at block 960 of FIG. 9E, and identify the name "Odie" 535 at block 965. At 970, it is determined whether the name 535 matches a previously identified contact name (i.e. a recognized name in the body 520 that was associated with a contact address). In this example, "Odie" 518 would have been previously found in the body 520, and likely associated with the e-mail address 516 from the header 510. Thus, at 975, the process matches the name 535 with the contact name represented by the name 518, and therefore associates the name 535 with the same address as that associated with the name 518.

As described above, if there is no match to a previously identified contact name found at 970, then at 980 a further attempt to match the recognized name to an address is made. This further attempt may be carried out as illustrated in block 990 in FIG. 9F. The process may cycle through the previously described methods for associating a name with a contact address. Thus, when entering block 980, the process first determines whether the name matches a name associated with a contact address, or matches a contact address, in the header 510 at block 914. If such a match is found, then the name is associated with that contact address at 995. If no match is found in the header 510, then at 930 the context surrounding the name in the message body 520 is scanned to determine if there is a contact address that is likely associated with the name. If a contact address is found within the predefined range or context of the message, then again the name is associated with that contact address at 995. If no, then the process moves to 950, and attempts to match the name against address book or other contact data store entries. If a match is found, then again at 995 the name is associated with that contact address. Otherwise, the process in 990 ends. The various blocks 914, 930, 950 need not take place in the order set out above. Any one of the blocks may precede the other. In addition, the matching process described in relation to FIG. 9A, that of matching selected strings from the header 510 with strings in the message body 520, and associating the corresponding header addresses with any matched message body strings, may also be included in the process of FIG. 9F, either in place of the process represented by block 914 body or in addition to it.

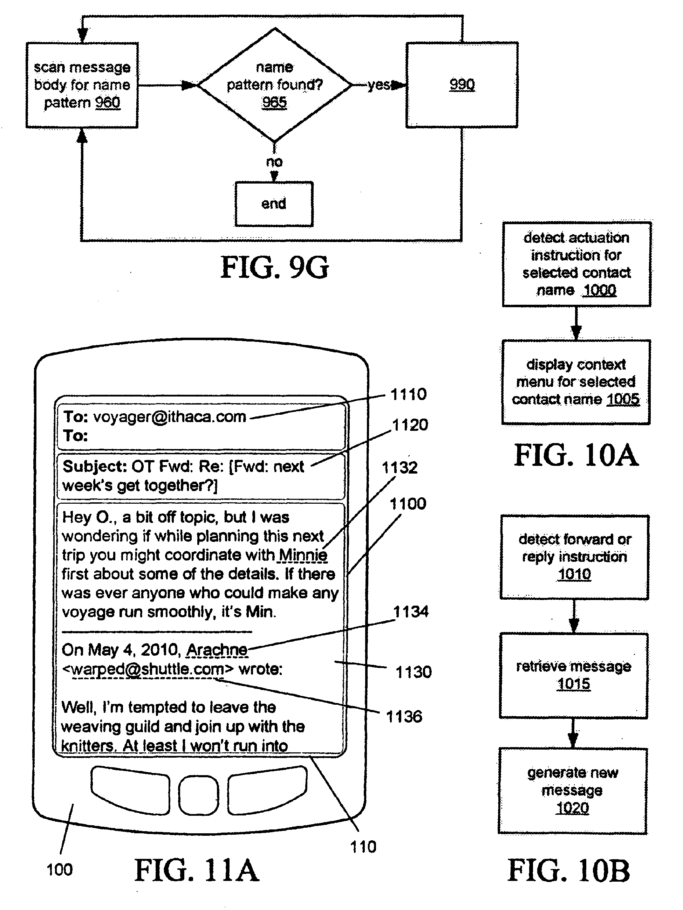

A further embodiment of the process is shown in FIG. 9G, in which the attempted match in block 970 of FIG. 9E is omitted. Instead, the message is scanned for a name matching a predefined pattern at 960; at 965, if it is determined that a match is found, then the process moves to block 990, as explained above. In this embodiment, the device 100 saves the time and processing overhead required to carry out the initial check of block 970, and instead attempts to associate the name with an address without any reference to any contact names previously identified in the message body 520 that may be relevant. The order of matches attempted in the block 990 may be reordered according to a predetermined order of preference.

Once names identified within the message body have been associated with a contact address, the associations may be stored at the device in the manner described above, in association with the original form of the message. In a further embodiment, the associations may be embedded into the message itself, and stored at the device 100 with the contact address for each name identified in the message body inserted in the body. In a simple embodiment, the contact address may simply be inserted immediately following the name identified in the message. While the method and formatting used to embed the contact address in the message may be defined in a non-standard way, for example in a customized format for use with a specific messaging client application, in other embodiments the information may be embedded in accordance with defined message standards.

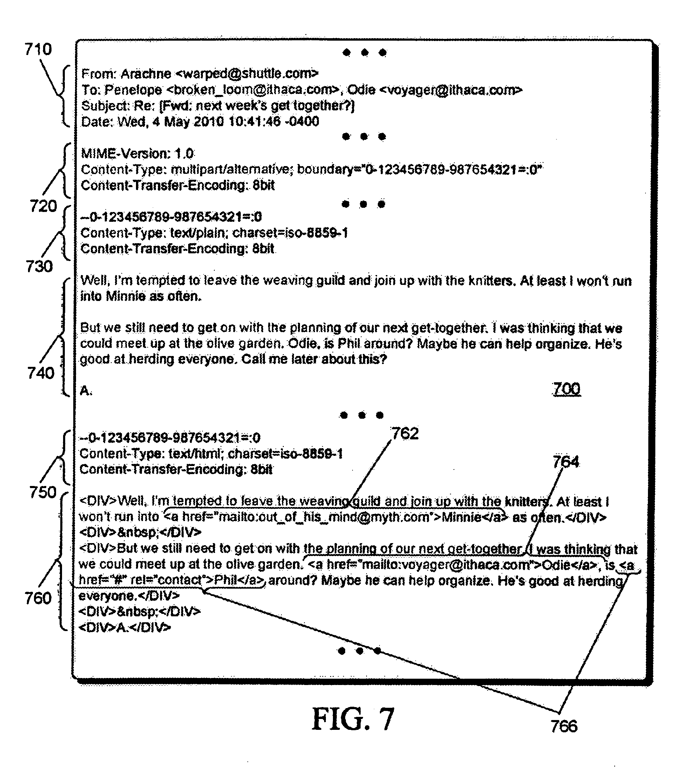

An example of a message 700 in which contact address information has been embedded in accordance with a defined standard, the MIME standard, is shown in FIG. 7. The content of the message 700 is similar to the content of message 500 of FIG. 5A, but only portions of the message content have been excerpted in FIG. 7 for ease of reference. Similar to the message 500, the message 700 may be provided with a header 710 and additional content. The precise content of the message 700 may depend on the formatting applied to the message. For example, a typical e-mail message may include additional routing and formatting instructions or information, not all of which is shown in FIG. 7. The message 700 may comprise MIME header information 720, and MIME boundary information 730, 750 defining separate parts of a multipart message. In the example of FIG. 7, the message 700 is provided in at least plain text and HTML encoded versions. The plain text content is included at 740. The HTML content is included at 760, and may comprise markup to define a structure for the content, formatting instructions to be applied directly to specific content, hyperlinks and anchors, embedding instructions, and other elements. The markup may thus be used to define associations between names in the HTML content and a corresponding contact address. Marked-up content 762 is one example of a marked-up name. In the HTML content 760, the name, which has been determined to be associated with an e-mail address, is marked up to specify an anchor associated with a "mailto:" action. When the HTML portion 760 of the message is displayed in a messaging client or other viewer application capable of rendering HTML content, the name "Minnie" contained within the markup 762 may be displayed as a hyperlink, which may then be actuated to generate a new message addressed to the e-mail address defined in the markup. As another example, the name "Phil" contained within markup string 766 is associated with a different action, defined using the "rel" attribute. The relationship may be defined such that upon actuating the contact name "Phil" when the message 700 is displayed, a new process is launched for initiating a message addressed to that contact name, or a context menu or other graphical user interface element, such as a "tooltip" (i.e. an information box displayed next to the contact name) is displayed. The context menu or other graphical user interface element may include the contact address associated with the name, and/or may be actuated to initiate creation of a message addressed to that contact name.

Thus, once contact names have been identified within a message, the message may be revised or marked up to embed the contact information within the message itself to provide a revised message, such as the revised message 700. This revised message may be stored in the message store at the communication device 100 instead of or in addition to the originally received or originally stored message. If the revised message 700 is stored, a record in the message store may include a flag or other indicator to indicate that the message had already been processed in accordance with the methods described above. Thus, the next time a command is received to retrieve and display the message, the messaging client may determine from the message store record and the indicator that a revised message 700 is available, and may display the revised message 700 instead of the originally received message. The indicator further indicates to the messaging client that the message does not need to be processed to identify potential contact names within the message body.

As described above, once the contact names in a message 500 (or message 700) have been identified, one of the names thus identified in the message 500 (or 700) may be brought into focus and a command invoked in relation to that name and its associated address. This process is briefly illustrated at FIG. 10A, which indicates that at 1000, the device 100 detects an actuation instruction for a selected contact name in the message body; then, at 1005, a context menu may be displayed. The context menu may list options directed to the creation of new messages addressed to the address associated with the selected contact name.

A further process is illustrated in FIG. 10B, in which the communication device 100 may detect at 1010 an instruction to create either a message forwarding a message to a recipient, or a message replying to a message. This instruction may be received while the message to be forwarded or replied to is being displayed in a user interface, or while the user interface is displaying a listing of messages in a mailbox stored at or available to the device 100. The device 100 may then retrieve a copy of the subject message from the message store, determining whether a revised version of the message, as described with reference to FIG. 7 above, is available. If such a revised version is available, that revised version is retrieved at 1015, then at 1020 the device 100 generates a new message that either inserts or attaches the revised message retrieved at 1015, and may initiate a view or application for editing of the new message. In this way, the new message may include the contact addresses that had been previously embedded in the parent message, so the recipient of the new message will receive the same contact information. Alternatively, upon receipt of the instruction to generate the reply or forwarding message at 1010, the process may retrieve the original version of the message (i.e., without contact addresses embedded in the message as described with respect to FIG. 7), then pass to the step of generating the new message at 1020. In that case, contact names may still be identified in the newly generated message, in accordance with the process described below with respect to FIG. 11A.

The foregoing processes described above with reference to FIGS. 6A to 6F and 9A to 9G were generally described in the context of a message that may have been received at the communication device 100. The processes of scanning the message body of a message for a name, and determining an associated contact address for the name, may also be applied to a message composed at the communication device 100, either prior to or after transmission from the communication device 100. If the message is retrieved from a message store available to the device 100 and displayed after it has been transmitted, then the processes described above in connection with FIGS. 6A to 6F and 9A to 9G may be used. If the message has not yet been transmitted from the communication device 100, for example in the context of the new message generated as a result of the process of FIG. 10B, the same processes may be applied, but it may be noted that the header information in the message may not yet be complete, since a user of the communication device 100 may still insert further addresses in the header.

An example of a message composed at the communication device 100 is shown in FIG. 11A. The graphical user interface 1100 shown in this figure includes a header display region 1110, in which the addressees of the message may be displayed; a subject display region, in which a subject line for the message may be displayed; and a message body display region 1130, where the message being composed (if it has not yet been transmitted and/or rendered uneditable) is displayed. One or more of these regions may be merged together; for example, the header display region 1110 may include the subject display region.

As with the message examples discussed previously, both contact addresses and names identified in the message body may be highlighted or otherwise distinguished from the remainder of the message body content, and associated with contact addresses. In FIG. 11A, the name "Minnie" 1132, the name "Arachne" 1134, and an address 1136 are identified. The latter element, the address 1136, may be associated with the address it represents. The first two elements, the names 1132 and 1134, may be associated with contact addresses in the manner described above. For example, the name "Arachne" 1134 may be associated with the address 1136 in the following line due to the address 1136's proximity to the name 1134. The name "Minnie" 1132 may be associated with an address appearing later in the message body (not shown).

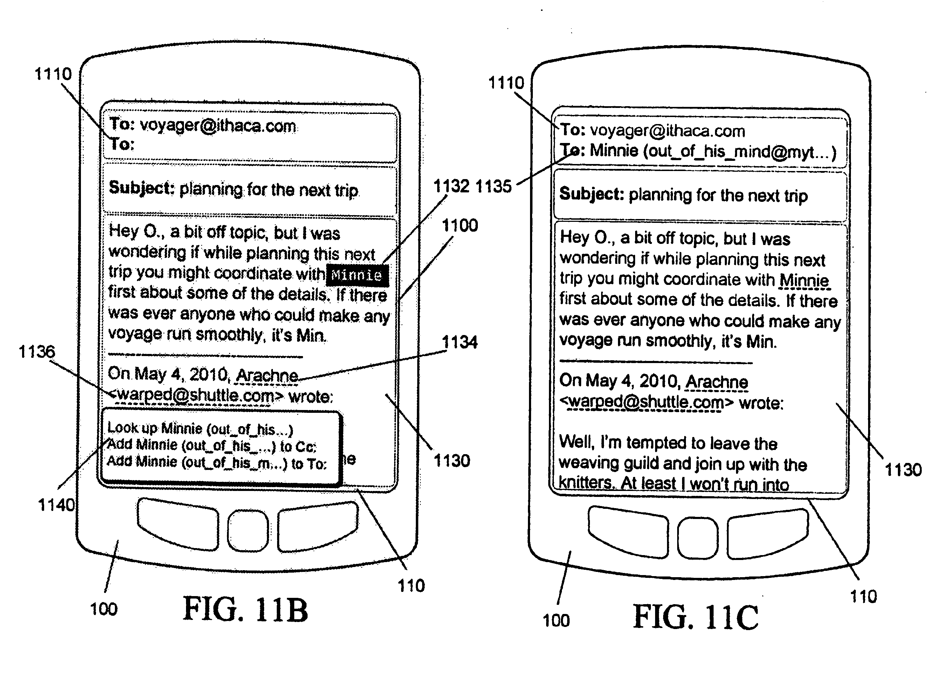

Once the names in the message body have been made focusable, commands may be invoked in relation to these names to take certain actions on the message. For example, FIG. 11B illustrates a context menu overlaying the message body display region 1130. This context menu may be invoked in response to a detection of an actuation command while focus was hovering over the name 1132. In this example, the context menu 1140 provides the user with the option to select one of a plurality of actions pertaining to the contact address associated with the name 1132. The context menu 1140 provides for creation of a new message addressed to the associated contact address; addition of the contact address (and optional friendly name) to the current message as a recipient, for example in the "To:" field or the "Cc:" field. If the device 100 detects an instruction to carry out one of these functions, for example adding the contact address as a recipient, then the user interface may show that the new contact address has been added at 1135 of FIG. 11C.

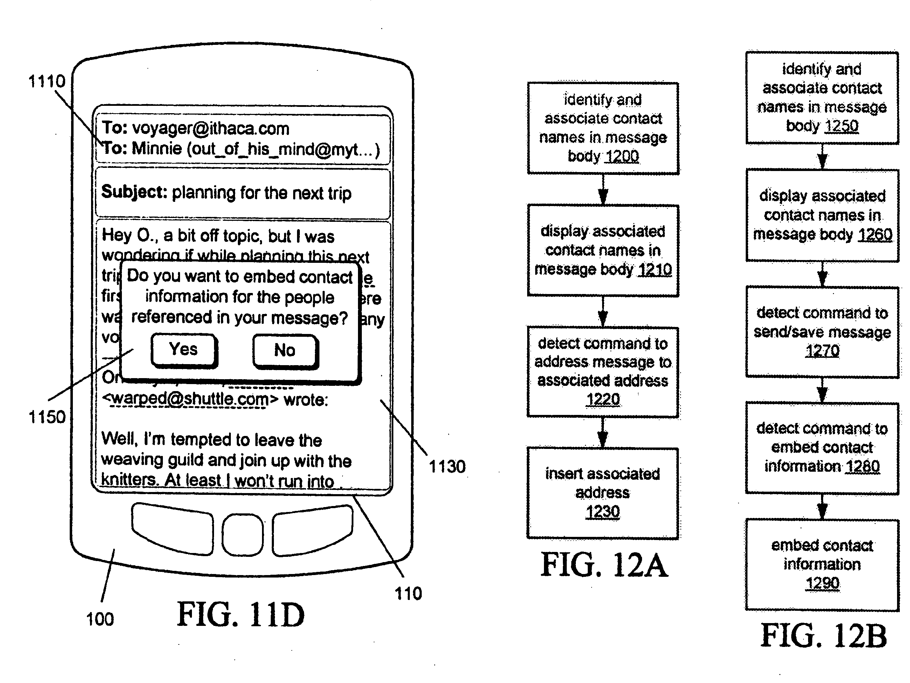

This process is illustrated in FIG. 12A. At 1200, names are identified in the message body and associated with contact addresses, as described above. At 1210, the contact names are indicated in the message body as the message is being viewed or edited. At 1220, an instruction is received in respect of one of the contact names to insert that contact in the header of the message as a recipient. At 1230, the contact name is inserted in the header of the message, either by inserting both the name and the associated address, or only the associated address in the header.

As with the previously described embodiments, the contact address information may be embedded within the message prior to transmission from the communication device 100. Embedding of the information may occur automatically when the message is saved at and/or transmitted from the communication device 100, or may occur upon receipt of an express instruction to carry out the embedding. FIG. 11D illustrates a dialog box 1150 displayed on the device 100, requesting an instruction regarding embedding of the contact information for the individuals referenced in the body of the message. The dialog box 1150 may be displayed in response to detection of an instruction to either save the message or to transmit the message to the identified recipients. If a response to the dialog box 1150 indicates that the information is to be embedded, it may be inserted into the message content as described above. If the response received indicates that the information is not to be embedded, any information temporarily stored in the message or in association with the message at the device 100 may be discarded.

The foregoing process is illustrated in FIG. 12B. At 1250, names are identified in the message body and associated with contact addresses, as described above. At 1260, the contact names are indicated in the message body as the message is being viewed or edited. At 1270, an instruction is received to transmit the message or save it at the communication device 100. At 1280, the device 100 detects an instruction to embed the contact information in the message, which as explained above may be in response to a command invoked via a dialog box 1150. Finally at 1290, the contact information is embedded within the message. In a subsequent step, not shown, the message thus revised is either saved at the device 100, transmitted from the device 100, or both.

Thus, as mentioned above, the foregoing systems and methods provide means for a user of the communication device to address messages to a recipient without having to manually enter the recipient's address or look up the recipient in an address book or other contact data store. This reduces potential overhead in generating messages for transmission from the communication device, as a separate address book application or search function may not need to be invoked to retrieve the appropriate address. Further, this solution reduces the need for scrolling or paging through a message to locate the address of a person referenced in the body of the message, therefore reducing possible wear and tear on the various user interface systems of the device 100. In addition, in many of the foregoing embodiments, the source for the appropriate contact address for a name found in the message body is taken from the message itself, whether from the message body or from the message header. This solution therefore need not rely on an address book or other contact data store at the communication device 100 at all, since the message itself is mined for the appropriate contact information to be associated with a name found in the message body. Finally, this solution also provides a system and method for creating a version of a message with contact information embedded within the message, so that the contact address associated with a name in the message body is preserved for reference at a later time when the message is displayed again at the communication device 100, or when the message is transmitted to a recipient communication device. Because the contact address information may be embedded within the message, the recipient communication device need not be equipped to run the same processes described above for scanning and recognition of proper names within the message body.

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, it should be understood that steps and the order of the steps in the processing described herein may be altered, modified and/or augmented and still achieve the desired outcome. Also, it will be appreciated by those skilled in the art that while the embodiments described above provided for scanning of the message body 520 of a message 500, in further embodiments the processes may scan attachments to a received message or a message to be transmitted from the communication device 100. The attachments may comprise previously transmitted or received messages, and may contain therein header information or body content including contact addresses that may be mined in the manner described above.

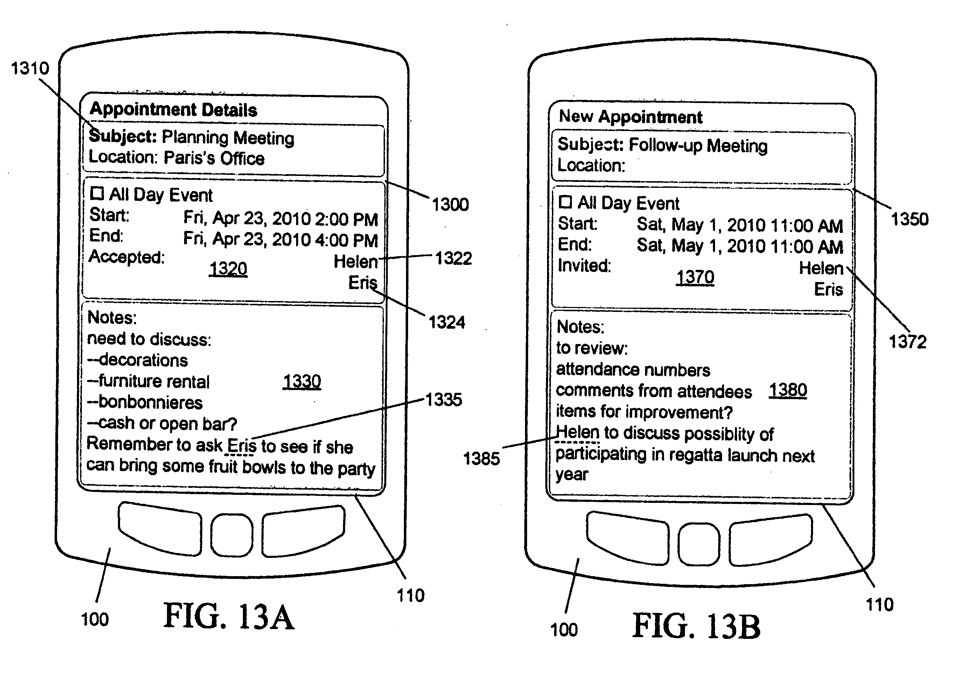

It will also be appreciated that although the embodiments herein have been directed generally to messages, similar systems and methods may be carried out in respect of other types of user data. Referring to FIGS. 13A and 13B, for example, similar processes may be used in respect of calendar events, such as meeting or appointment requests. FIG. 13A illustrates a user interface 1300 displaying appointment details for a calendar event. The user interface 1300 comprises, in this example, a subject and location display region 1310, a scheduling display region 1320, and a notes or custom text field 1330. The scheduling display region 1320 may include information such as start and ending dates, and a list of attendees who may have been accepted and/or invited to the event, and optionally those attendees who may have been invited but declined the invitation to the event. The list of attendees, here shown as names 1322 and 1324, may be associated with contact addresses. A copy of the calendar event invitation may have been transmitted to those attendees at their respective contact addresses. Thus, although the contact addresses are not shown, they may be comprised within the calendar event store entry for this particular event.

The notes or custom text field 1330 may include user-entered free text. Like the content of an e-mail or other type of message, the notes may refer to individuals by name. Thus, similar processes to those described above may be implemented to recognize names in the notes portion of the calendar event data, to associate the recognized names with contact addresses taken from the scheduling information for the calendar event, and to display these contact names within the notes field. Thus, when the calendar event details are viewed in the user interface 1300, focus may be moved to the contact name 1335 within the notes field, and similar commands may be invoked to transmit a message or take some other action with respect to that contact name, without requiring a user of the device 100 to move focus back up to the attendees list in the scheduling region 1320, which may require scrolling through pages of content in the display 110. Similarly, as shown in the user interface 1350 for composing or editing a calendar event of FIG. 13B, a recognized name 1385 in the notes field 1380 of the new calendar event entry may be associated with a contact address associated with an invitee 1372 identified in the scheduling region 1370.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A method of displaying a message (500) in a user interface at a communication device (100), the message comprising a message body and a message header, the method comprising:
identifying one or more proper names or personal pronouns in the message body;
matching the identified one or more proper names or personal pronouns with a contact address found in either the message header or the message body;
upon determining that the identified one or more proper names or personal pronouns and the found contact address match, creating an association (800) between the identified one or more proper names or personal pronouns and the contact address; and (113)
rendering the identified one or more proper names or personal pronouns within a display of the message body in the user interface such that the identified one or more proper names or personal pronouns is actuatable through user input to invoke a command, the identified one or more proper names or personal pronouns being actuatable in association with the associated contact address.

2. The method of claim 1, wherein the contact address is found in the message header.

3. The method of claim 2, wherein one or more proper names is identified and the message header comprises a contact name-contact address pair, and matching the identified one or more proper names with the contact address comprises matching the proper name to a string in the message header, the string being associated with the contact address.

4. The method of claim 1 or 2, wherein one or more personal pronouns is identified and the contact address corresponds to a sender of the message.

5. The method of claim 1 , wherein the contact address is comprised in the message body.

6. The method of any one of claims 1 to 5, further comprising detecting a command (1000) in respect of a selected one of the identified one or more proper names or personal pronouns, and in response to the detected command, either:
inserting the contact address associated with the selected proper name or personal pronoun in the message header as a recipient of said message; or
generating a new message addressed to the associated contact address.

7. The method of claim 6, wherein one or more proper names is identified, the message is a message being composed at the communication device, and the associated contact address is inserted in the message header in response to the detected command.

8. The method of any one of the preceding claims, wherein rendering the identified one or more proper names or personal pronouns comprises rendering the identified one or more proper names or personal pronouns as a hyperlink.

9. The method of any one of the preceding claims, further comprising embedding the associated contact address in the message in association with the identified one or more proper names or personal pronouns to provide a revised message, and storing (840) said revised message at the communication device.

10. The method of claim 9, further comprising generating (1020) a new message comprising at least a portion of the revised message.

11. The method of any one of the preceding claims, wherein the message body comprises at least a portion of each of a body of a previously received message and a header of the previously received message.

12. A communication device (100) adapted to carry out the method of any one of claims 1 to 11.

13. A computer-readable medium having embodied therein code which, when executed by a processing device (100), causes the device to carry out the method of any one of claims 1 to 11.

## Patentansprüche

1. Verfahren zum Anzeigen einer Nachricht (500) in einer Benutzerschnittstelle an einer Kommunikationsvorrichtung (100), wobei die Nachricht einen Nachricht-Hauptteil und einen Nachricht-Header aufweist, wobei das Verfahren aufweist:
Identifizieren eines oder mehrerer Eigennamen oder Personalpronomen in dem Nachricht-Hauptteil;
Zuordnen des/der identifizierten einen oder mehreren Eigennamen oder Personalpronomen zu einer Kontaktadresse, die in entweder dem Nachricht-Header oder dem Nachricht-Hauptteil gefunden wird;
bei einem Bestimmen, dass der/die identifizierte(n) eine oder mehreren Eigennamen oder Personalpronomen und die gefundene Kontaktadresse übereinstimmen, Erzeugen einer Assoziation (800) zwischen dem/den identifizierten einen oder mehreren Eigennamen oder Personalpronomen und der Kontaktadresse; und (113)
Darstellen des/der identifizierten einen oder mehreren Eigennamen oder Personalpronomen in einer Anzeige des Nachricht-Hauptteils in der Benutzerschnittstelle derart, dass der/die identifizierte(n) eine oder mehreren Eigennamen oder Personalpronomen durch eine Benutzereingabe betätigbar ist, um einen Befehl aufzurufen, wobei der/die identifizierte(n) eine oder mehreren Eigennamen oder Personalpronomen in Verbindung mit der assoziierten Kontaktadresse betätigbar ist/sind.

2. Das Verfahren gemäß Anspruch 1, wobei die Kontaktadresse in dem Nachricht-Header zu finden ist.

3. Das Verfahren gemäß Anspruch 2, wobei ein oder mehrere Eigenname(n) identifiziert wird/werden und der Nachricht-Header ein Kontaktname-Kontaktadresse-Paar aufweist, und das Zuordnen des/der identifizierten einen oder mehreren Eigennamen mit der Kontaktadresse ein Zuordnen des Eigennamens zu einer Zeichenkette in dem Nachricht-Header aufweist, wobei die Zeichenkette mit der Kontaktadresse assoziiert ist.

4. Das Verfahren gemäß Anspruch 1 oder 2, wobei ein oder mehrere Personalpronomen identifiziert wird/werden und die Kontaktadresse einem Sender der Nachricht entspricht.

5. Das Verfahren gemäß Anspruch 1, wobei die Kontaktadresse in dem Nachricht-Hauptteil enthalten ist.

6. Das Verfahren gemäß einem der Ansprüche 1 bis 5, das weiter aufweist ein Erfassen eines Befehls (1000) in Bezug auf einen ausgewählten des/der identifizierten einen oder mehreren Eigennamen oder Personalpronomen, und in Reaktion auf den erfassten Befehl, entweder:
Einfügen der Kontaktadresse, die mit dem ausgewählten Eigennamen oder Personalpronomen assoziiert ist, in den Nachricht-Header als einen Empfänger der Nachricht; oder
Erzeugen einer neuen Nachricht, die an die assoziierte Kontaktadresse adressiert ist.

7. Das Verfahren gemäß Anspruch 6, wobei ein oder mehrere Eigenname(n) identifiziert wird/werden, die Nachricht eine Nachricht ist, die an der Kommunikationsvorrichtung erstellt wird, und die assoziierte Kontaktadresse in den Nachricht-Header in Reaktion auf den erfassten Befehl eingefügt wird.

8. Das Verfahren gemäß einem der vorhergehenden Ansprüche, wobei das Darstellen des/der identifizierten einen oder mehreren Eigennamen oder Personalpronomen aufweist ein Darstellen des/der identifizierten einen oder mehreren Eigennamen oder Personalpronomen als einen Hyperlink.

9. Das Verfahren gemäß einem der vorhergehenden Ansprüche, das weiter aufweist ein Einbetten der assoziierten Kontaktadresse in die Nachricht in Verbindung mit dem/den identifizierten einen oder mehreren Eigennamen oder Personalpronomen, um eine revidierte Nachricht vorzusehen, und Speichern (840) der revidierten Nachricht an der Kommunikationsvorrichtung.

10. Das Verfahren gemäß Anspruch 9, das weiter aufweist ein Erzeugen (1020) einer neuen Nachricht, die zumindest einen Teil der revidierten Nachricht aufweist.

11. Das Verfahren gemäß einem der vorhergehenden Ansprüche, wobei der Nachricht-Hauptteil zumindest einen Teil von jedem eines Hauptteils einer zuvor empfangenen Nachricht und eines Headers der zuvor empfangenen Nachricht aufweist.

12. Eine Kommunikationsvorrichtung (100), die ausgebildet ist, das Verfahren gemäß einem der Ansprüche 1 bis 11 auszuführen.

13. Ein computerlesbares Medium mit darin aufgenommenem Code, der bei Ausführung durch eine Verarbeitungsvorrichtung (100) die Vorrichtung veranlasst, das Verfahren gemäß einem der Ansprüche 1 bis 11 auszuführen.

## Revendications

1. Procédé d'affichage d'un message (500) dans une interface utilisateur au niveau d'un dispositif de communication (100), le message comprenant un corps de message et un en-tête de message, le procédé comprenant les étapes consistant à :
identifier un ou plusieurs noms propres ou pronoms personnels dans le corps de message ;
faire correspondre le ou les noms propres ou pronoms personnels identifiés avec une adresse de contact trouvée soit dans l'en-tête de message, soit dans le corps de message ;
après avoir déterminé que le ou les noms propres ou pronoms personnels identifiés et l'adresse de contact trouvée correspondent, créer une association (800) entre le ou les noms propres ou pronoms personnels identifiés et l'adresse de contact ; et (113)
apporter le ou les noms propres ou pronoms personnels identifiés dans un affichage du corps de message dans l'interface utilisateur de manière que le ou les noms propres ou pronoms personnels identifiés puissent être actionnés par le biais d'une saisie utilisateur pour appeler une commande, le ou les noms propres ou pronoms personnels identifiés pouvant être actionnés en association avec l'adresse de contact associée.

2. Procédé selon la revendication 1, dans lequel l'adresse de contact est trouvée dans l'en-tête de message.

3. Procédé selon la revendication 2, dans lequel un ou plusieurs noms propres sont identifiés et l'en-tête de message comprend une paire nom de contact/adresse de contact, et la mise en correspondance du ou des noms propres identifiés avec l'adresse de contact comprend la mise en correspondance du nom propre avec une chaîne dans l'en-tête de message, la chaîne étant associée à l'adresse de contact.

4. Procédé selon la revendication 1 ou 2, dans lequel un ou plusieurs pronoms personnels sont identifiés et l'adresse de contact correspond à un expéditeur du message.

5. Procédé selon la revendication 1, dans lequel l'adresse de contact est incluse dans le corps de message.

6. Procédé selon l'une quelconque des revendications 1 à 5, comprenant, en outre, la détection d'une commande (1000) relativement à un nom propre ou pronom personnel sélectionné parmi le ou les noms propres ou pronoms personnels identifiés et, en réponse à la commande détectée, soit :
l'insertion de l'adresse de contact associée au nom propre ou pronom personnel sélectionné dans l'en-tête de message en tant que destinataire dudit message ; ou
la production d'un nouveau message destiné à l'adresse de contact associée.

7. Procédé selon la revendication 6, dans lequel un ou plusieurs noms propres sont identifiés, le message est un message en cours de composition au niveau du dispositif de communication, et l'adresse de contact associée est insérée dans l'en-tête de message en réponse à la commande détectée.

8. Procédé selon l'une quelconque des revendications précédentes, dans lequel le fait d'apporter le ou les noms propres ou pronoms personnels identifiés comprend l'apport du ou des noms propres ou pronoms personnels identifiés en tant qu'hyperlien.

9. Procédé selon l'une quelconque des revendications précédentes, comprenant, en outre, l'incrustation de l'adresse de contact associée dans le message en association avec le ou les noms propres ou pronoms personnels identifiés pour fournir un message révisé, et le stockage (840) dudit message révisé au niveau du dispositif de communication.

10. Procédé selon la revendication 9, comprenant, en outre, la production (1020) d'un nouveau message comprenant au moins une partie du message révisé.

11. Procédé selon l'une quelconque des revendications précédentes, dans lequel le corps de message comprend au moins une partie d'un corps d'un message reçu précédemment et d'un en-tête du message reçu précédemment.

12. Dispositif de communication (100) conçu pour la mise en oeuvre du procédé selon l'une quelconque des revendications 1 à 11.

13. Support pouvant être lu sur ordinateur comportant, incorporé en son sein, un code qui, lorsqu'il est exécuté par un dispositif de traitement (100), amène le dispositif à mettre en oeuvre le procédé selon l'une quelconque des revendications 1 à 11.
